# EUROPÄISCHE PATENTSCHRIFT

(11) **EP 4 122 893 B1**
(45) Veröffentlichungstag und Bekanntmachung des Hinweises auf die Patenterteilung: **25.02.2026**
(21) Anmeldenummer: 22183408.8
(22) Anmeldetag: 06.07.2022
(51) Int. Cl.: C02F 1/16, C01B 3/00, C01B 3/22, C02F 103/08

(54) **VERFAHREN ZUR ENTSALZUNG VON WASSER**
METHOD FOR DESALINATION OF WATER
PROCÉDÉ DE DESSALEMENT DE L'EAU

(30) Priorität: 20.07.2021 DE 102021118709
(43) Veröffentlichungstag der Anmeldung: 25.01.2023
(73) Patentinhaber: N-ERGIE Aktiengesellschaft, 90429 Nürnberg (DE)
(72) Erfinder: FLEISCHER, Patrick, 90429 Nürnberg (DE)
(74) Vertreter: Ellwanger, Arndt

(56) Entgegenhaltungen:
- DE-A1- 102011 111 565
- ELSAID KHALED ET AL: "Recent progress on the utilization of waste heat for desalination: A review", ENERGY CONVERSION AND MANAGEMENT, ELSEVIER SCIENCE PUBLISHERS, OXFORD, GB, vol. 221, 9 July 2020 (2020-07-09), XP086264632, ISSN: 0196-8904, [retrieved on 20200709], DOI: 10.1016/J.ENCONMAN.2020.113105

## Beschreibung

Die vorliegende Erfindung betrifft ein Verfahren zur Entsalzung von Wasser, umfassend mindestens die nachfolgenden zwei Verfahrensschritte. Im ersten Verfahrensschritt wird zunächst Wasserstoff gespeichert, indem Wasserstoff mit einem Träger (T1) in Kontakt gebracht wird, wodurch ein mit Wasserstoff beladener Träger (T2) erhalten und zusätzlich Wärme freigesetzt wird. Im zweiten Verfahrensschritt wird diese freigesetzte Wärme in eine Vorrichtung (V1) eingespeist, um dort Wasser zu entsalzen. Der Salzgehalt des Wassers kann verringert werden, so dass das Wasser als Trinkwasser oder Brauchwasser geeignet ist oder das Wasser kann vollentsalzt werden. Das vollentsalzte Wasser wird wiederum in einer Elektrolysezelle zur Generierung von Wasserstoff verwendet wobei die Elektrolyse vorzugsweise räumlich getrennt und/oder zeitlich versetzt von der Entsalzung erfolgen kann. Der aus dem beladenen Träger (T2) wieder freigesetzte oder in einer Elektrolysezelle generierte Wasserstoff kann wiederum zur Strom-, Wärmeerzeugung oder als chemischer Reaktionspartner eingesetzt werden oder er kann genutzt werden, um wiederum einen Träger (T1) mit Wasserstoff zu beladen.

EP-A 3 415 609 betrifft ein Verfahren zum Speichern und Lagern von Wasserstoff, umfassend zwei Verfahrensschritte. Im ersten Verfahrensschritt wird der Wasserstoff gespeichert, indem Wasserstoff mit einem Träger (T1) in Kontakt gebracht wird, wodurch ein mit Wasserstoff beladener Träger (T2) erhalten wird. Der Wasserstoff wird dabei vorzugsweise chemisch, insbesondere im Rahmen einer Hydrierung, an den Träger (T1) gebunden. Im zweiten Verfahrensschritt erfolgt die Lagerung des mit Wasserstoff beladenen Träger (T2) in einer Vorrichtung (V1), die Bestandteil einer Biogasanlage ist oder war. Der im Träger (T2) gespeicherte Wasserstoff kann anschließend aus dem Träger (T2) wieder freigesetzt und nachfolgend zur Erzeugung von Strom und gegebenenfalls Wärme verwendet werden. Das in EP-A 3 415 609 beschriebene Verfahren kann in eine bestehende Biogasanlage integriert oder eine Biogasanlage kann entsprechend umgerüstet werden. Weiterhin ist dort ein Verfahren zur Erzeugung von elektrischem Strom und gegebenenfalls von Wärme offenbart, wobei zunächst das Verfahren zum Speichern und Lagern von Wasserstoff durchgeführt wird.

DE 10 2011 111 565 A1 offenbart ein Verfahren, in dem N-Ethylcarbazol als Träger mit Wasserstoff in Kontakt gebracht, durch Hydrierung ein mit Wasserstoff beladener Träger erhalten und Wärme freigesetzt wird, welche u.a. zur Hauswärmeversorgung genutzt werden kann.

DE-A 10 2012 005 023 offenbart eine Anordnung sowie ein Verfahren zur autonomer Bereitstellung von Elektrizität über Wasserstoff. Hierbei wird zunächst elektrischer Strom aus einer regenerativen Quelle bereitgestellt, der zur Herstellung von Wasserstoff aus Wasser in mindestens einem Elektrolyseur verwendet wird. Der so hergestellte Wasserstoff wird in einen ersten chemischen Reaktor überführt, der mindestens ein Substrat mit einem ausgedehnten pi-konjugierten System enthält, wobei in diesem ersten chemischen Reaktor eine zumindest teilweise Hydrierung des Substrats durchgeführt wird. Anschließend wird dieses zumindest teilweise hydrierte Substrat in einen Speichertank überführt. Aus diesem Speichertank wird das zumindest teilweise hydrierte Substrat wiederum in einen zweiten chemischen Reaktor überführt, wo eine Dehydrierung dieses Substrates unter Freisetzung von Wasserstoff erfolgt. Dieser im zweiten chemischen Reaktor erzeugte Wasserstoff wird in eine Anlage oder Maschine zur Wandlung des Wasserstoffs in elektrische Energie, vorzugsweise in eine Brennstoffzelle, überführt. Von dort wird elektrischer Strom an den Ort des Bedarfs abgegeben.

Das in DE-A 10 2012 005 023 beschriebene Verfahren bzw. die entsprechende Anlage eignet sich beispielsweise als Notstromaggregat oder an Orten, an denen ein öffentliches Stromnetz fehlt, sowie in Krisensituationen, wie Kriegen. Anwendungsgebiete können Krankenhäuser, chemische Anlagen, Computerzentralen oder auch Kernkraftwerke sein. Letztendlich wird bei diesem Verfahren Wasserstoff zwischengespeichert, was gegebenenfalls auch über einen längeren Zeitraum erfolgen kann, um ihn im Bedarfsfall zur Stromerzeugung einzusetzen. Der anfänglich bereitgestellte elektrische Strom, der aus regenerativen Quellen stammt, mit dem der Wasserstoff erzeugt wird, kann beispielsweise aus Wasserkraft, Windenergie, solarer Strahlung oder auch aus Biogas stammen. Die Durchführung des Verfahrens in Verbindung mit einer Wasserentsalzung ist in DE-A 10 2012 005 023 jedoch nicht offenbart.

Ein sinngemäßes Verfahren bzw. eine entsprechende Anordnung ist in DE-A 10 2011 121 704 offenbart. Die Anordnung (Vorrichtung) wird insbesondere zur Pufferung von Überschuss-Elektrizität in Gebäuden eingesetzt. Das entsprechende Verfahren dient zur Energiespeicherung in Gebäuden. Das Verfahren sowie die entsprechende Anordnung erfordern zwingend die Verwendung einer Brennstoffzelle zur Oxidation des in dem zweiten chemischen Reaktor freigesetzten Wasserstoffs unter Freisetzung von Energie.

Entsalzungsanlagen und Verfahren zur Entsalzung von Wasser sind dem Fachmann bekannt. Ein wesentliches Problem beim Betrieb von Entsalzungsanlagen ist, dass die Entsalzung sehr energieintensiv ist.

Hintergrundinformationen zu Wasserentsalzungsverfahren finden sich unter anderem in "A. Panagopoulos, K.-J. Haralambous, M. Loizidou, Desalination brine disposal methods and treatment technologies - A review, Science of the Total Environment 2019, Vol. 693, 133545", "M. Rommel, Fraunhofer ISE, Solarenergie für Afrika/Meerwasserentsalzung mit Sonnenenergie, http://solarenergie-fuer-afrika.de/deutsch/konferenz-2003/referate/rommel-meerwasserentsalzung.html", am 06.07.2021 abgerufen; auf den Internet-Seiten des Bundesverbandes Geothermie ("https://www.geothermie.de", https://www.geothermie.de/bibliothek/lexikon-der-geothermie/m/meerwasserentsalzung.html, am 06.07.2021 abgerufen) oder auf den Internet-Seiten der Deutschen Meerwasserentsalzung (DME e.V.). Beispielsweise werden in Saudi Arabien und den Vereinigten Arabischen Emiraten große Mengen an Trink- und Brauchwasser mit Hilfe einer MSF-Entsalzungsanlage, gekoppelt an das Kraftwerk Shoaibe bzw. in der Kraftwerks- und Meerwasserentsalzungsanlage Dschabad Ali gewonnen. Aufgrund des globalen Bevölkerungswachstums und der zunehmenden Notwendigkeit zur künstlichen Bewässerung in der Landwirtschaft ist in den nächsten Jahren mit einem weiterhin stark steigenden Bedarf an entsalztem Wasser zu rechnen. Weltweit werden in den kommenden Jahren signifikante Mengen an PEM-Elektrolyse-Kapazitäten aufgebaut werden. Für die Herstellung von 1 t Wasserstoff werden rund 10 t vollentsalztes Wasser für die PEM-Elektrolyse benötigt.

Grundsätzlich lassen sich die dem Fachmann bekannten Verfahren zur Entsalzung von Wasser in zwei große Gruppen unterteilen, die thermischen und die elektrischen Verfahren. Hintergrundinformationen finden sich beispielsweise in den im vorangegangenen Absatz erwähnten Literaturstellen.

Thermische Verfahren basieren auf dem Grundprinzip der Destillation, wobei hauptsächlich zwei Verfahren Anwendung finden, die mehrstufige Entspannungsverdampfung (MSF, engl. Multi stageflash) sowie die Mehrfacheffektdestillation (MED, engl. Multi-effect destillation), welche den Vorläufer der MSF darstellt. Im erstgenannten Verfahren wird das zu entsalzende Wasser zunächst typischerweise auf über 100 °C erhitzt (beispielsweise auf 110 °C), typischerweise mit Hilfe eines Wärmetauscher, wobei das Wasser selbst gleichzeitig zur Kühlung verwendet wird. Eine solche Vorrichtung zur Erwärmung des zu entsalzenden Wassers wird in der einschlägigen Literatur häufig auch als Soleerhitzer bezeichnet. Anschließend wird das erwärmte Wasser in eine Kammer geleitet, in der Atmosphärendruck oder ein Druck niedriger als Atmosphärendruck herrscht. Da der Siedepunkt von Wasser bei Atmosphärendruck 100 °C beträgt, verdampft das Wasser beim Einleiten in eine solche Kammer schlagartig und kondensiert an einem entsprechenden Wärmetauscher. Je nach Anlage ist eine unterschiedliche Anzahl solcher Kammern mit variablem Druck und Temperatur denkbar, wobei Druck und Temperatur in jedem Schritt abnehmen. Ein möglicher Temperaturbereich, der dabei von den verschiedenen Kammern abgedeckt wird, liegt zwischen 130 und 20 °C. Obwohl ein Teil der Energie, welcher zur Aufheizung des Wassers benötigt wird, über die Wärmetauscher in Form von Kondensationswärme zurückgewonnen werden kann, ist das Verfahren dennoch sehr energieintensiv.

Ein typisches elektrisch betriebenes Verfahren stellt die Umkehrosmose dar. Auch dieses Verfahren ist energieintensiv und erfordert hochwertige Technik und Wartung. Weitere Verfahren, welche allerdings vergleichsweise geringe Anteile an der weltweiten Produktion von entsalztem Wasser aufweisen, sind Dampfkompression, Membrandestillation oder Elektrodialyse.

Wie oben bereits erwähnt, ist ein wesentliches Problem beim Betrieb von Entsalzungsanlagen der hohe Energieaufwand. Dies ist beispielsweise beschrieben in "K. Hennecke, A. Lokurlu, M. Rommel, F. Späte, Solare Prozesswärme für Industrie, Meerwasserentsalzung und Solarchemie. Conference Paper, FVS - LZE, Themen 2005" sowie den darin enthaltenen Literaturstellen oder "Meerwasserentsalzung mit Sonnenenergie, Fraunhofer für Solare Energiesysteme, ISE Jahresbericht 2003, Seite 82". Um einen Kubikmeter Wasser zu verdampfen, werden etwa 700 kWh an Energie benötigt, nachzulesen beispielsweise in "M. Rommel, Fraunhofer ISE, Solarenergie für Afrika/Meerwasserentsalzung mit Sonnenenergie, http://solarenergie-fuer-afrika.de/deutsch/konferenz-2003/referate/rommel-meerwasserentsalzung.html", am 06.07.2021 abgerufen.

Hauptsächlich werden derzeit als Energieträger Öl, Erdgas und Kernenergie genutzt. Umgerechnet werden bei den thermischen Verfahren zur Verdampfung von einem Kubikmeter Wasser entsprechend beispielweise etwa 70 Liter Benzin verbraucht. Ebenso müssen bei den elektrischen Verfahren große Mengen an Elektrizität bereitgestellt werden, um beispielsweise die bei der Umkehrosmose großen entstehenden Druckunterschiede überwinden zu können. Dies stellt nicht nur in Bezug auf die Endlichkeit der fossilen Energieträgervorkommen, sondern auch in Bezug auf das bei einer Verbrennung fossiler Energieträger freigesetzte CO₂ und die damit verbundene Klimaerwärmung ein großes Problem dar. Folglich werden dringend Verfahren gesucht, welche erneuerbare Energien nutzen, um die in den Entsalzungsverfahren benötigte Energie bereit zu stellen.

Eine Verknüpfung der Wasserentsalzung mit dem Inkontaktbringen eines Trägers mit Wasserstoff zur Speicherung des Wasserstoffs durch exotherme Hydrierung ist weder in den vorgenannten Artikeln noch sonst irgendwo bisher beschrieben worden.

Die der vorliegenden Erfindung zugrunde liegenden Aufgabe besteht folglich in der Bereitstellung eines neuen Verfahrens zur Entsalzung von Wasser.

Gelöst wird diese Aufgabe durch ein Verfahren zur Entsalzung von Wasser gemäß Anspruch 1.

Ein erster Vorteil des erfindungsgemäßen Verfahrens ist darin zu sehen, dass Energie über einen längeren Zeitraum sicher zwischengespeichert werden kann. Dieser Vorteil kann sehr anschaulich anhand der nachfolgenden Fallkonstellation verdeutlicht werden. Beispielsweise wird in günstigen Zeiten ein Überschuss an Energie in Form von elektrischem Strom erzeugt. Denkbar sind hier saisonal verteilte windreiche Tage im Zusammenhang mit der Erzeugung von elektrischem Strom durch Windenergie bzw. sonnenreiche Tage, insbesondere während des Sommerhalbjahres, zur Erzeugung von elektrischem Strom, beispielsweise über Photovoltaikanlagen oder Sonnenkollektoren. Der jeweilige Überschuss an Energie, insbesondere an elektrischem Strom, kann beispielsweise in Wasserstoff umgesetzt werden. Erfindungsgemäß wird Wasserstoff, der vorzugsweise wie vorstehend beschrieben aus elektrischen Strom gewonnen werden kann, durch Inkontaktbringen mit einem geeigneten Träger sicher gespeichert, so dass der Wasserstoff bzw. indirekt die Energie über einen längeren Zeitraum gelagert werden kann. Im Bedarfsfall, also bei einem kontinuierlichen oder plötzlich eintretenden Bedarf an entsalztem Wasser, kann der so zwischengespeicherte Wasserstoff bzw. die zwischengespeicherte Energie in Wärme zur Verwendung in einem thermischen Verfahren zur Entsalzung von Wasser rückgewandelt bzw. umgewandelt werden.

Ein wesentlicher Vorteil des erfindungsgemäßen Verfahrens ist darin zu sehen, dass die bei der vorstehend beschriebenen saisonalen Speicherung von elektrischem Strom in Folge der exothermen Einspeicherung von Wasserstoff freiwerdende Energie wiederverwendet werden kann. Dies ist insbesondere dann ein großer Vorteil, wenn das Ein- und Ausspeichern von Wasserstoff, insbesondere bei dem nachstehend beschriebenen bevorzugten LOHC-Verfahren, entweder räumlich und/oder zeitlich getrennt voneinander erfolgen. Die Zwischenspeicherung der bei der Wasserstoffspeicherung infolge des erfindungsgemäßem Schritts a) freiwerdenden Energie ist generell schwierig bzw. mit relativ hohen Verlusten verbunden, insbesondere dann, wenn besagte Energie für einen längeren Zeitraum zwischengespeichert werden soll.

Ein wesentlicher Vorteil des erfindungsgemäßen Verfahrens ist darin zu sehen, dass die Energie, welche für die relativ energieaufwändige Wasserentsalzung benötigt wird, durch erneuerbare Energien, hier in Form von Wärme, die bei der Beladung eines Trägers mit Wasserstoff frei wird, aufgebracht wird und der energiereiche, Wasserstoff beladene Träger anschließend für weitere Prozesse zur Verfügung steht. Gleichzeitig wird mittels erneuerbarer Energie gewonnenes Trinkwasser, Brauchwasser oder vollentsalztes Wasser gewonnen. Das gewonnene Trinkwasser steht beispielsweise in Regionen mit Wasserknappheit zur Verfügung, entsalztes Wasser kann ebenfalls zur Bewässerung in der Landwirtschaft oder zur Industrieproduktion verwendet werden.

Des Weiteren kann vollentsalztes Wasser gewonnen werden, welches auch zur Elektrolyse von Wasser und somit zur Herstellung von Wasserstoff aus Wasser mithilfe erneuerbarer Energie, insbesondere Photovoltaik, benötigt wird. Weiterhin kann bei Bedarf die Carbonathärte des zuvor entsalzten Wassers durch Zugabe von Calciumhydrogencarbonat wieder erhöht werden, um das Wasser in Industrieprozessen nutzen zu können, welche eine ausreichende Carbonathärte benötigen. Entsprechende Verfahren sind dem Fachmann bekannt.

Die erfindungsgemäße Ankopplung einer Wasserstoffspeicherung gemäß Schritt a), insbesondere im Rahmen eines LOHC-Prozesses, an eine Wasserentsalzungsanlage gemäß Schritt b) bzw. die Kopplung an eine Elektrolysezelle ist somit in mehrfacher Hinsicht vorteilhaft. Einerseits kann (wie bereits beschrieben) bei der Einspeicherung (Hydrierung) von Wasserstoff in einen geeigneten Träger, insbesondere eine LOHC-Flüssigkeit (bzw. in einem LOHC-Verfahren), entstehende Wärme im Prozess der Wasserentsalzung effizient genutzt werden. Darüber hinaus kann in einem nachfolgenden Verfahrensschritt das gegebenenfalls vollentsalzte Wasser aus der Wasserentsalzung wiederum zur Durchführung einer Elektrolyse und Generierung von Wasserstoff genutzt werden, da es sich bei der Elektrolyse um ein Verfahren handelt, welches in der Regel die Nutzung von vollentsalztem Wasser erfordert. Speziell bei der PEM (Polymerelektrolytmembran)-Elektrolyse ist dies unbedingt erforderlich.

Das erfindungsgemäße Verfahren kann in den einzelnen nachfolgend beschriebenen Ausführungsformen in mehrfacher Hinsicht sowohl zeitlich versetzt und/oder räumlich getrennt voneinander durchgeführt werden. Letztendlich können die eingesetzten Träger, insbesondere LOHC-Flüssigkeiten, mehrfach mit Wasserstoff beladen und anschließend wieder entladen werden. Die jeweils benötigte oder freigesetzte Energie kann ebenfalls in einem Kreislauf und/oder räumlich bzw. zeitlich versetzt eingesetzt werden.

Ein weiterer Vorteil des erfindungsgemäßen Verfahrens ist darin begründet, dass in einer bevorzugten Ausführungsform die jeweilige Infrastruktur der in Europa bzw. weltweit vorhandene Wasserentsalzungsanlagen verwendet werden kann, um das erfindungsgemäße Verfahren durchzuführen. Dadurch können die Anfangsinvestitionskosten gegenüber einem kompletten Neubau/dem Kauf einer kompletten neuen Anlage deutlich reduziert werden. Wesentliche Vorrichtungskomponenten jeder gängigen Wasserentsalzungsanlage basierend auf einer Wärmezufuhr können für das erfindungsgemäße Verfahren verwendet werden, ohne dass dabei Kosten im großen Umfang im Zusammenhang mit der Umrüstung einzelner Vorrichtungselemente einer solchen Entsalzungsanlage anfallen müssen.

Im Rahmen der vorliegenden Erfindung hat der Begriff "in räumlicher Nähe" (sofern nachfolgend nicht anders definiert) die folgende Bedeutung: Die jeweiligen Schritte werden auf demselben Betriebsgelände (oder auf einem angrenzenden Betriebsgelände, zum Beispiel innerhalb eines Industrieparks) durchgeführt, vorzugsweise in einem (räumlichen) Abstand von maximal 2 bis 3 km, mehr bevorzugt in einem Abstand von maximal 500m, insbesondere in einem Abstand von maximal 100 m (bzw. die entsprechenden Vorrichtungen zur Durchführung dieser Schritte befinden sich in den entsprechenden Abständen). Sofern im Rahmen der vorliegenden Erfindung konkrete Zahlenwerte für einen Abstand angegeben werden, beziehen sich die jeweiligen Abstandsangaben auf die Luftlinie.

Im Rahmen der vorliegenden Erfindung hat der Begriff "räumlich getrennt voneinander" (sofern nachfolgend nicht anders definiert) die folgende Bedeutung: Die jeweiligen Schritte werden nicht auf demselben Betriebsgelände (oder auf einem angrenzenden Betriebsgelände) durchgeführt, vorzugsweise in einem (räumlichen) Abstand von mindestens 5km, mehr bevorzugt in einem Abstand von 50 bis 1 000 km (bzw. die entsprechenden Vorrichtungen zur Durchführung dieser Schritte befinden sich in den entsprechenden Abständen). Erfindungsgemäß ist es prinzipiell möglich, dass die entsprechenden Schritte, die in einem räumlichen Abstand durchgeführt werden sollen, in deutlich größeren Abständen durchgeführt werden, beispielsweise in einem Abstand von mehreren 1000 km. Sinngemäßes gilt für Begriffe wie "in räumlichem Abstand", "in räumlicher Distanz" oder "räumlich versetzt".

Im Rahmen der vorliegenden Erfindung hat der Begriff "in zeitlicher Nähe" (sofern nachfolgend nicht anders definiert) die folgende Bedeutung: die jeweiligen Schritte werden vorzugsweise parallel, also zur gleichen Uhrzeit, durchgeführt, insbesondere wenn sie auf demselben Betriebsgelände durchgeführt werden. Gegebenenfalls können die jeweiligen Schritte auch mit einer gewissen zeitlichen Verzögerung zueinander durchgeführt werden, vorzugsweise in einem (zeitlichen) Abstand von maximal einem Tag, mehr bevorzugt in einem Abstand von maximal sechs Stunden, insbesondere in einem Abstand von maximal einer Stunde (bzw. die entsprechenden Vorrichtungen zur Durchführung dieser Schritte werden im entsprechenden Zeitrahmen eingesetzt). Sinngemäßes gilt für Begriffe wie "in direkter zeitlicher Abfolge".

Im Rahmen der vorliegenden Erfindung hat der Begriff "zeitlich getrennt voneinander" (sofern nachfolgend nicht anders definiert) die folgende Bedeutung: die jeweiligen Schritte werden nicht parallel, also nicht zur gleichen Uhrzeit, durchgeführt, insbesondere werden sie nicht auf demselben Betriebsgelände durchgeführt. Stattdessen werden die jeweiligen Schritte mit einer zeitlichen Verzögerung zueinander durchgeführt, die mindestens einen Tag beträgt. Vorzugsweise beträgt der (zeitliche) Abstand zwischen der Durchführung der jeweiligen Schritte mindestens einen Monat, besonders bevorzugt mindestens drei Monate (bzw. die entsprechenden Vorrichtungen zur Durchführung dieser Schritte werden im entsprechenden Zeitrahmen eingesetzt).

Erfindungsgemäß ist es prinzipiell möglich, dass die entsprechenden Schritte die in einem zeitlichen Abstand durchgeführt werden sollen, in deutlich größeren zeitlichen Abständen durchgeführt werden, beispielsweise in einem Abstand von mehreren Monaten oder sogar mehreren Jahren. Sinngemäßes gilt für Begriffe wie "in zeitlichem Abstand", "in zeitlicher Distanz" oder "zeitlich versetzt".

Nachfolgend wird das erfindungsgemäße Verfahren zur Entsalzung von Wasser sowie die gegebenenfalls zusätzliche Erzeugung von elektrischen Strom näher erläutert.

Der erste Gegenstand der vorliegenden Erfindung ist ein Verfahren zur Entsalzung von Wasser, wobei das Verfahren die Schritte a) und b) umfasst.

In Verfahrensschritt a) erfolgt ein Inkontaktbringen eines Trägers (T1) mit Wasserstoff zur Speicherung des Wasserstoffs unter Erhalt eines mit Wasserstoff beladenen Trägers (T2) sowie Freisetzung von Wärme.

Als Träger (T1) kann prinzipiell jeder beliebige, dem Fachmann bekannte Träger verwendet werden, der dazu geeignet ist, Wasserstoff in irgendeiner Form zu speichern. Weiterhin ist erfindungsgemäß der Träger (T1) dazu in der Lage, den Wasserstoff reversibel zu speichern. Dies bedeutet, dass aus dem mit Wasserstoff beladenen Träger (T2), der durch Inkontaktbringen des Wasserstoffs mit dem Träger (T1) erhalten wird, der Wasserstoff zu einem späteren Zeitpunkt (und unabhängig von der Durchführung des Verfahrensschritts b) wieder freigesetzt werden kann und dabei der ursprünglich eingesetzte Träger (T1) wiedergewonnen wird.

Das Speichern des Wasserstoffs kann beispielsweise so durchgeführt werden, dass Wasserstoff chemisch oder physisorptiv, vorzugsweise chemisch, an den Träger (T1) gebunden wird. Im Rahmen der vorliegenden Erfindung ist es jedoch erforderlich, dass das Speichern des Wasserstoffs reversibel möglich ist. Insbesondere Kohlendioxid, das chemisch mit Wasserstoff unter Erhalt von Methan reagieren kann, ist kein Träger (T1) im Sinne der vorliegenden Erfindung, weil aus Methan nicht direkt und/oder auf einfachem Wege reversibel Wasserstoff freigesetzt sowie Kohlendioxid wiedergewonnen werden kann. Folglich ist Methan auch kein mit Wasserstoff beladener Träger (T2) im Sinne der vorliegenden Erfindung.

Eine chemische Bindung des Wasserstoffs an den Träger (T1) kann beispielsweise dadurch erfolgen, dass der Träger (T1) ein Metallhydridspeicher ist, der ein aus einer Metalllegierung hergestelltes Material enthält, das Wasserstoff aufnimmt und chemisch bindet. Alternativ kann der Träger (T1) auch eine, vorzugsweise flüssige, organische Verbindung sein. Solche organischen Verbindungen werden auch als Wasserstoffträger oder LOHC (englisch für: liquid organic hydrogen carriers) bzw. organische Hydride bezeichnet. Solche Wasserstoffträger (LOHC) sind dem Fachmann bekannt und beispielsweise in DE-B 10 2013 223 589, EP-A 1 475 349 und DE-A 10 2012 005 023 beschrieben.

Diese Form der Wasserstoffspeicherung unter Verwendung der LOHCs hat den besonderen Vorteil, dass der LOHC-Träger (T1) in der Regel unter den verwendeten Prozessbedingungen in flüssiger Form vorliegt. Die physiochemischen Eigenschaften eines solchen LOHC-Trägers haben hohe Ähnlichkeit zu herkömmlichen flüssigen Kraftstoffen, so dass Pumpen zum Transport oder Behälter zur Lagerung aus dem Bereich der Kunststoff- und Printstofflogistik genutzt werden können. Die Wasserstoffspeicherung in chemisch gebundener Form in einer organischen Flüssigkeit wie LOHC erlaubt eine drucklose Lagerung bei Normalbedingungen über große Zeiträume ohne signifikanten Wasserstoffverlust. Sofern es sich bei dem Träger (T1) um einen LOHC-Träger handelt, liegt der Träger zur Aufnahme von Wasserstoff in seiner vollständig oder zumindest teilweise dehydrierten Form vor. Vorzugsweise handelt es sich dabei um die vollständig dehydrierte Form. Eine zumindest teilweise dehydrierte Form kann dann vorliegen, wenn beispielsweise eine vollständig dehydrierte Form eines solchen Trägers über zwei oder mehrere Stellen verfügt, an denen das entsprechende Molekül hydriert werden kann, und mindestens eine dieser zur Hydrierung geeigneten Stellen bereits in hydrierter Form vorliegt, aber noch mindestens eine Stelle in dehydrierter (nicht hydrierter) Form vorliegt. Beispiele hierfür sind unter anderen aromatischen Verbindungen, insbesondere polyzyklische aromatische Verbindungen mit einem konjugierten π-Elektronensystem.

Das Inkontaktbringen des Trägers (T1) mit Wasserstoff kann prinzipiell nach beliebigen, dem Fachmann bekannten Methoden durchgeführt werden, beispielsweise indem Wasserstoff über den Träger (T1) übergeleitet wird, durch den Träger (T1) durchgeleitet wird oder auf den Träger (T1) aufgepresst wird.

Durch das Inkontaktbringen des Trägers (T1) mit Wasserstoff wird in Schritt a) des erfindungsgemäßen Verfahrens somit ein mit Wasserstoff beladener Träger (T2) erhalten. Sowohl der Träger (T1) als auch der durch Inkontaktbringen mit Wasserstoff erhaltene mit Wasserstoff beladene Träger (T2) können als Gemisch von zwei oder mehreren Trägern (T1) und/oder (T2) vorliegen. Sofern der Wasserstoff chemisch an den Träger (T1) gebunden wird, handelt es sich dabei um eine vollständige oder zumindest teilweise Hydrierung des entsprechenden Trägers (T1), so dass sich der mit Wasserstoff beladene Träger (T2) chemisch vom entsprechenden unbeladenen Träger (T1) unterscheidet. Vorzugsweise handelt es sich dabei um eine vollständige Hydrierung des Trägers (T1) mit Wasserstoff unter Erhalt des mit Wasserstoff beladenen Trägers (T2).

Das Verhältnis der Träger (T1) und (T2) im erfindungsgemäßen Verfahren gemäß Schritt a) wird nachfolgend an dem aus dem Stand der Technik bekannten LOHC-Träger Toluol erläutert. Toluol enthält einen Benzolring und somit drei π-Elektronenpaare. Toluol stellt also einen Träger (T1) dar, der in seiner vollständig dehydrierten Form vorliegt. Durch Inkontaktbringen des Toluols mit Wasserstoff wird erfindungsgemäß eine zumindest teilweise oder vorzugsweise vollständige Hydrierung von Toluol zu Methylcyclohexan als Träger (T2) erzielt. Sofern die vollständige Hydrierung von Toluol durchgeführt wird, werden also alle drei π-Elektronenpaare des Toluols hydriert, so dass Methylcyclohexan die vollständig hydrierte Form des Toluols darstellt. Sofern nur ein oder zwei der π-Elektronenpaare des Toluols hydriert worden sind, handelt es sich nur um eine teilweise Hydrierung. Solche zumindest teilweise hydrierten Verbindungen können sowohl als Träger (T1) oder als Träger (T2) erfindungsgemäß eingesetzt werden.

Erfindungsgemäß ist der Träger (T1) eine ungesättigte Verbindung, bevorzugt eine Verbindung mit mindestens einer Kohlenstoff-Kohlenstoff-Doppelbindung, mehr bevorzugt eine aromatische oder hetero-aromatische Verbindung, noch mehr bevorzugt ein N-Alkylcarbazol, Toluol, Dibenzyltoluol, Benzyltoluol, Naphthalin oder ein Azaborin, besonders bevorzugt Dibenzyltoluol.

Bei Verbindungen mit mindestens einer Kohlenstoff-Kohlenstoff-Doppelbindung (C-C-Doppelbindung) kann es sich beispielsweise um ein Olefin, einen Aromaten oder einen Heteroaromaten handeln. Solche Verbindungen sind dem Fachmann prinzipiell bekannt. Diese Verbindungen können gegebenenfalls substituiert sein, beispielsweise durch eine oder mehrere Alkylgruppen von beliebiger Kettenlänge, wie Methyl, Ethyl, Propyl oder durch sonstige funktionelle Gruppen, wie Halogen, Amino oder Carboxyl. Heteroaromatische Verbindungen weisen als Heteroatom mindestens ein Heteroatom auf, das vorzugsweise Sauerstoff, Stickstoff und/oder Schwefel ist. Aromatische oder heteroaromatische Verbindungen können monozyklisch, bizyklisch oder gegebenenfalls polyzyklisch sein. Gegebenenfalls können die entsprechenden Zyklen (Ringe) zumindest teilweise auch in hydrierter Form vorliegen. Ebenso ist es denkbar, dass beispielsweise bei einer bizyklischen Verbindung einer der beiden Zyklen vollständig hydriert ist.

Sofern als Träger (T1) ein N-Alkylcarbazol eingesetzt wird, kann der an das Stickstoffatom gebundene Alkylrest eine beliebige Kettenlänge annehmen, beispielsweise kann es sich dabei um Methyl, Ethyl, Propyl, Isopropyl oder Butyl sowie gegebenenfalls Mischungen davon handeln. Vorzugsweise handelt es sich dabei um N-Ethylcarbazol.

Demzufolge wird im erfindungsgemäßen Verfahren in Schritt a) vorzugsweise die entsprechende teilweise oder insbesondere vollständig hydrierte Form der vorstehend definierten konkreten Träger (T1) als mit Wasserstoff beladener Träger (T2) erhalten.

Prinzipiell ist es möglich, dass Schritt a) in der gleichen Vorrichtung (V4) durchgeführt wird wie die nachfolgend näher definierte Lagerung des mit Wasserstoff beladenen Trägers (T2). Dies kann erfolgen, wenn beispielsweise in eine solche Vorrichtung (V4) eine spezielle Einheit/Vorrichtungsbestandteil integriert wird, der die Durchführung des Verfahrensschritts a) getrennt von der Durchführung der Lagerung des mit Wasserstoff beladenen Trägers (T2) ermöglicht. Entsprechende Einheiten oder Einbaumaßnahmen sind dem Fachmann bekannt. Vorzugsweise wird jedoch im erfindungsgemäßen Verfahren Schritt a) in einer separaten Vorrichtung (V8) durchgeführt, die vorzugsweise ein chemischer Reaktor ist.

Vorzugsweise wird Schritt a) in einer druckstabilen Vorrichtung, insbesondere in einem druckstabilen chemischen Reaktor, durchgeführt. Weiterhin ist es bevorzugt, dass Schritt a) bei einer Temperatur zwischen 50 °C und 400 °C, insbesondere zwischen 120 °C und 300 °C, insbesondere zwischen 150 °C und 280 °C durchgeführt wird. Die Hydrierung, also das Beladen des Trägers (T1) mit Wasserstoff, findet vorzugsweise bei einem Verfahrensdruck von 2 bar bis 200 bar, insbesondere bei 10 bar bis 100 bar, statt. Weiterhin ist es bevorzugt, dass Schritt a) in Gegenwart eines metallhaltigen Katalysators durchgeführt wird. Als Katalysatoren für die Beladung des LOHC-Trägers (T1) eignen sich insbesondere solche, die das Element Ruthenium und/oder Nickel aufweisen. Es sind auch Katalysatoren möglich, die andere Elemente oder zusätzliche Elemente neben Ruthenium und/oder Nickel aufweisen. Wesentlich sind solche Elemente, die Wasserstoff anlagern und auf LOHC-Träger (T1) übertragen können. Neben Ruthenium und/oder Nickel sind insbesondere Metalle wie Chrom, Eisen, Kobalt, Kupfer, Iridium, Palladium oder Platin als Katalysatoren möglich.

Aufgrund der exothermen Speicherung des Wasserstoffs durch Inkontaktbringen mit dem Träger (T1) wird im erfindungsgemäßen Schritt a) zusätzlich Wärme freigesetzt.

Im Verfahrensschritt b) erfolgt wiederum eine Einspeisung der in Schritt a) freigesetzten Wärme in eine Vorrichtung (V1), um in der Vorrichtung (V1) Wasser zu entsalzen.

Alle dem Fachmann bekannten Wasserarten können grundsätzlich zum Einsatz kommen. Im erfindungsgemäßen Verfahren wird in der Vorrichtung (V1) Meerwasser entsalzt. Es versteht sich von selbst, dass der Salzgehalt des entsalzten Wassers geringer ist als der Salzgehalt des eingesetzten Wassers. Eine Einteilung von Wässern anhand des Chloridionen-Gehaltes, welcher häufig stellvertretend für den Salzgehalt herangezogen wird, findet sich in "S. EI-Manharawy, S. Hafez, A new chemical classification system of natural waters for desalination and other industrial use, Desalination 2003, 156, Seiten 163-180". Nach dieser Klassifikation enthält Frischwasser 0,5 bis 1,5 mmol/kg Chlorid, Brackwasser 1,5 bis 50 mmol/kg, Salzwasser 50 bis 500 mmol/kg, Meerwasser 500 bis 700 mmol/kg, Sub-Brine 700 bis 800 mmol/kg und Brine (Salzwasserkonzentrat) über 800 mmol/kg. Anstelle der Angabe mmol/kg sind auch andere Konzentrations- und Gewichtsangaben, wie beispielsweise g/kg, üblich und dem Fachmann bekannt.

Eine aktuell häufig verwendete Methode ist die Messung der elektrischen Leitfähigkeit als Summenparameter für die Ionenkonzentration, sowohl beispielsweise für die Bestimmung der sogenannten Salinität von Meerwasser als auch zur Qualitätskontrolle von Reinstwasser oder auch die Dichtebestimmung. Eine Richtlinie zur Umrechnung der Leitfähigkeit in Salzgehalt findet sich beispielsweise in der Practical Salinity Scale (PSS78) aus dem Jahre 1978. Hintergrundinformationen zur Bestimmung von Salzgehalt bzw. Salinität von Wässern finden sich beispielsweise auf den Internetseiten der Wasser- und Schifffahrtsverwaltung des Bundes (www.wsv.de, abgerufen am 26.05.2021), dem Wasserstraßen- und Schiffahrtsamt Weser-Jade-Nordsee (https://www.wsa-weser-jade-nordsee.wsv.de/, Wasserstraßen-Bau und Unterhaltung-Gewässerkunde-Salzgehalt-Messverfahren, abgerufen am 26.05.2021) oder die Internet-Seite http://salinometry.com/. Geräte zur Bestimmung der Leitfähigkeit sind dem Fachmann als solche bekannt.

Sofern nicht anders angegeben, wird der Salzgehalt des Wassers im Rahmen der vorliegenden Erfindung in mmol/kg angegeben und. Die Bestimmung erfolgt über die dem Fachmann bekannten Methoden, wie beispielsweise die Messung der Leitfähigkeit und die entsprechende Umrechnung.

Verfahren zum Entsalzen von Wasser als solche sind, wie auch bereits zuvor erwähnt, einem Fachmann bekannt. Sinngemäßes gilt auch für die (chemische) Beschaffenheit von salzhaltigem und entsalztem Wasser als solchem, geeigneten Vorrichtungen zur Durchführung der Wasserentsalzung und/oder Weiterverwendung von teil- oder vollentsalztem Wasser, beispielsweise als Trinkwasser, Brauchwasser, Prozesswasser, Bewässerungswasser oder zur Durchführung von Wasserelektrolyse an vollentsalztem Wasser. Hintergrundinformationen in diesem Kontext können beispielsweise den eingangs bezüglich Entsalzung erwähnten Artikeln entnommen werden.

Als Vorrichtung (V1) kommen prinzipiell alle dem Fachmann bekannten Vorrichtungen infrage, in denen Wasser durch Wärmezufuhr entsalzt werden kann. Diese Vorrichtung (V1) umfasst mindestens einen Bereich zum Erwärmen von Wasser. Weiterhin kann die Vorrichtung (V1) auch an einen oder mehrere Wärmetauscher angeschlossen sein bzw. solche Wärmetauscher können in die Vorrichtung (V1) integriert sein.

Vorzugsweise ist die Vorrichtung (V1) mindestens eine Entsalzungsanlage ausgewählt aus dem Verfahren der vielstufigen Entspannungsverdampfung oder Mehrfacheffektdestillation.

Die in Schritt a) freigesetzte Wärme kann beispielsweise über eine Rohrleitung oder ein Rohrleitungssystem in die Vorrichtung (V1) geleitet werden. Um den Wärmetransport von Schritt a) nach Schritt b) möglichst effizient zu gestalten, ist es vorteilhaft, wenn dabei Wärmetauscher eingesetzt werden.

Im Rahmen der vorliegenden Erfindung ist es somit bevorzugt, dass in Schritt b)
i) die Vorrichtung (V1) eine Meerwasserentsalzungsanlage umfasst, vorzugsweise umfasst die Meerwasserentsalzungsanlage mindestens einen Wärmetauscher, mindestens eine Pumpe, mindestens einen Bereich zum Erwärmen von Wasser, mindestens ein Vorratsgefäß, mindestens eine Zuleitung und/oder mindestens einen Auslass, und/oder
ii) die in Schritt a) freigesetzte Wärme über eine Rohrleitung oder ein Rohrleitungssystem in die Vorrichtung (V1) geleitet wird, und/oder
iii) die in Schritt a) freigesetzte Wärme durch einen Wärmetauscher geleitet wird, um das in der Vorrichtung (V1) enthaltene Wasser, insbesondere Meerwasser, aufzuheizen, vorzugswiese wird mindestens ein Wärmetauscher eingesetzt, um das sich auf dem höchsten Temperaturniveau in der Vorrichtung (V1) befindliche Wasser weiter zu erhitzen, und/oder
iv) die Vorrichtung (V1) mindestens zwei Bereiche mit unterschiedlichen Temperaturzonen aufweist.

Typischerweise wird bei Nutzung des vielstufigen Entspannungs-Verdampfungsverfahrens das zugeführte Meerwasser im sogenannten Brine-Heater auf etwa 110 °C erhitzt und nachgeschaltet durch Entspannungsstufen geleitet, in denen Druck und Temperatur kontinuierlich abnehmen. Ein möglicher Temperaturbereich, der dabei von den verschiedenen Kammern abgedeckt wird, liegt zwischen 130 und 20 °C. Solche Kammern zum Erhitzen mit nachgeschalteten Entspannungsstufen sind dem Fachmann bekannt. Eine Vorrichtung zum Erhitzen des zu entsalzenden Wassers gemäß iii) wird in der einschlägigen Literatur, wie auch bereits oben erwähnt, häufig auch als "Soleerhitzer" bezeichnet.

Aufgrund des im erfindungsgemäßen Verfahren stattfindenden Wärmetransports von Schritt a) und Schritt b) ist es vorteilhaft, wenn die beiden Schritte in räumlicher Nähe voneinander durchgeführt werden, also die jeweiligen Vorrichtungen zur Durchführung dieser Schritte vorzugsweise nicht weit voneinander entfernt aufgestellt sind. Abstände von beispielsweise 500 m bis 1 km zwischen den jeweiligen Vorrichtungen zur Durchführung der beiden Schritte a) und b) sind in der Praxis problemlos zu bewältigen.

Zwar ist es denkbar bzw. technisch realisierbar, dass sich die jeweiligen Vorrichtungen zur Durchführung der beiden Schritte auch im einen größeren räumlichen Abstand zueinander finden, jedoch ist der Energieverlust umso größer, je weiter dieser Abstand zwischen den jeweiligen Vorrichtungen zur Durchführung der beiden Schritte a) und b) ist. Durch entsprechend ausgestaltete Rohrleitungen, beispielsweise spezielle isolierte Rohrleitungen, können auch größere Abstände überwunden werden, ohne dass es zu einem signifikanten Wärmeverlust kommen muss. Dies ist aber insofern mit einem Nachteil verbunden, weil dadurch die Installationskosten wieder ansteigen. Denkbar ist, dass sich die jeweiligen Vorrichtungen auf unterschiedlichen Betriebsgelände in näherer räumlicher Umgebung befinden.

Weiterhin ist es bevorzugt, dass Schritt a) in einer separaten Vorrichtung (V8) durchgeführt wird, die vorzugsweise ein chemischer Reaktor ist. Eine Beschreibung eines solchen chemischen Reaktors, welcher vorzugswiese eine druckstabile Vorrichtung ist, findet sich bereits weiter oben in der Beschreibung.

Erfindungsgemäß wird in Schritt b) in der Vorrichtung (V1)
i) Meerwasser entsalzt und
ii) in der Vorrichtung (V1) entsalztes Wasser mit einem maximalen Salzgehalt von höchstens 1,5 mmol/kg, insbesondere Trinkwasser erhalten, und/oder
iii) das Wasser, bevor es in der Vorrichtung (V1) entsalzt wird, in einer Vorrichtung (V2) gelagert und/oder das Wasser mit einem Lastkraftwagen, einem Eisenbahnwagen, einem Schiff, einem Hochseeschiff mittels einer Pipeline oder mittels einer Rohrleitung in die Vorrichtung (v1) angeliefert.

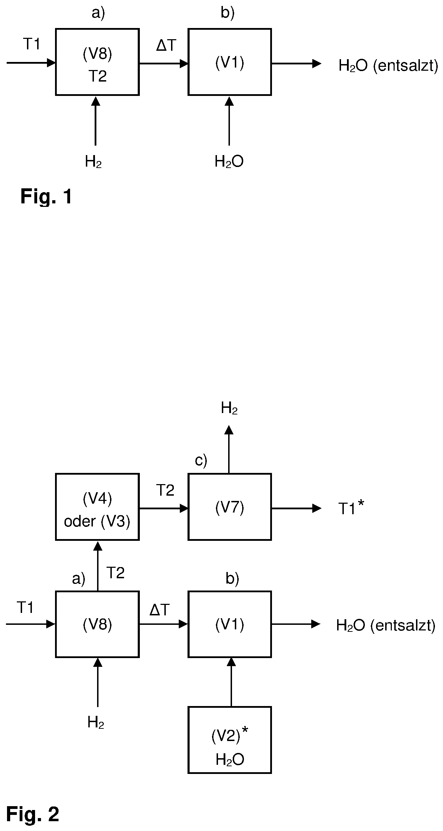

Figur 1 verdeutlicht das erfindungsgemäße Verfahren in seiner breitesten Form unter Berücksichtigung der Schritte a) und b). Zunächst wird gemäß Schritt a) in der Vorrichtung (V8), die vorzugsweise ein chemischer Reaktor ist, Wasserstoff mit einem geeigneten Träger (T1), vorzugsweise ist der Träger (T1) ein Wasserstoffträger (LOHC), in Kontakt gebracht, wodurch der Wasserstoff gespeichert wird, vorzugsweise durch chemische Bindung an den Träger (T1), insbesondere durch Hydrierung, wodurch ein mit Wasserstoff beladener Träger (T2) erzeugt wird. Der mit Wasserstoff beladene Träger (T2) kann in der Vorrichtung (V8) verbleiben, vorzugsweise wird der Träger (T2) jedoch zur Lagerung in eine separate Vorrichtung überführt. Die einzelnen Schritte und/oder das gesamte Verfahren kann sowohl batchweise als auch kontinuierlich betrieben werden. Die bei der Speicherung des Wasserstoffs in Schritt a) freigesetzte Wärme wird nach Schritt b) transportiert.

In Schritt b) erfolgt die Einspeisung der in Schritt a) freigesetzten Wärme in eine Vorrichtung (V1), um in der Vorrichtung (V1) Wasser zu entsalzen. Die Vorrichtung (V1) umfasst in der Regel mindestens eine Wasserentsalzungsanlage, in welcher vorzugsweise das Verfahren der vielstufigen Entspannungs-Verdampfung (MSF, engl. Multi-stageflash destillation) durchgeführt wird. Vorzugsweise umfasst die Wasserentsalzungsanlage mindestens eine Pumpe, mindestens einen Bereich zum Erwärmen von Wasser, mindestens ein Vorratsgefäß, mindestens eine Zuleitung und/oder mindestens einen Auslass. Gegebenenfalls können in einer Wasserentsalzungsanlage weitere, dem Fachmann bekannte, Vorrichtungselemente enthalten sein, beispielsweise mindestens ein Wärmetauscher.

Das zu entsalzende Wasser wird ebenfalls in die Vorrichtung (V1) eingespeist, wo dieses durch Wärmezufuhr unter Erhalt von Wasser mit niedrigerem Salzgehalt bis hin zu vollentsalztem Wasser erhalten wird. Das Wasser mit niedrigerem Salzgehalt bis hin zu vollentsalztem Wasser kann gegebenenfalls in der Vorrichtung (V1) verbleiben, vorzugsweise wird das entsalzte Wasser jedoch weiterverwendet und/oder eine andere Vorrichtung transportiert. Die Vorrichtungen (V8) und (V1) befinden sich vorzugsweise in räumlicher Nähe zueinander, beispielsweise auf demselben Betriebsgelände oder einem angrenzenden Betriebsgelände.

In der vorliegenden Erfindung wird das ir Verfahrensschritt b) erhaltene Wasser mit niedrigerem Salzgehalt bis hin zu vollentsalztem Wasser weiterverwendet. Die Weiterverwendung des entsalzten Wassers kann räumlich und/oder zeitlich unabhängig von der Lagerung und/oder Weiterverarbeitung des in Verfahrensschritt a) erhaltenen, mit Wasserstoff beladenen Trägers (T2) erfolgen. Insbesondere kann die Weiterverwendung des entsalzten Wassers räumlich und/oder zeitlich unabhängig von der Entsalzung des salzhaltigen Wassers in der Vorrichtung (V1) gemäß Verfahrensschritt b) erfolgen.

Erfindungsgemäß ist es bevorzugt, dass im erfindungsgemäßen Verfahren nach Schritt b) oder vorzugsweise im Anschluss an die Lagerung des mit Wasserstoff beladenen Trägers (T2) ein Schritt c) durchgeführt wird:
c) Freisetzung von Wasserstoff aus dem mit Wasserstoff beladenen Träger (T2) Prinzipiell ist es möglich, dass der optionale Verfahrensschritt c) ebenfalls in der Vorrichtung (V8) und/oder in der Vorrichtung (V4) durchgeführt wird. Vorzugsweise wird der Verfahrensschritt c) in einer separaten Vorrichtung (V7) durchgeführt, welcher insbesondere ein chemischer Reaktor ist. Die erfindungsgemäßen Verfahrensschritte
a) und c) sowie die gegebenenfalls zwischengeschaltete Lagerung des mit Wasserstoff beladenen Trägers (T2) werden also vorzugsweise jeweils in separaten Vorrichtungen durchgeführt. Prinzipiell ist es möglich, dass die Vorrichtung (V7) zur Durchführung des Schritts c) in einer von der Art her gleichen Vorrichtung durchgeführt wird wie die Vorrichtung (V8) zur Durchführung des erfindungsgemäßen Verfahrensschritts a). Geeignete Vorrichtungen zur Durchführung des erfindungsgemäßen Verfahrensschritts c) sind beispielsweise in DE-B 10 2013 223 589 offenbart.

Das Freisetzen des Wasserstoffs gemäß Verfahrensschritt c) erfolgt vorzugsweise in einem druckstabilen chemischen Reaktor bei einer Prozesstemperatur zwischen 100 °C und 450 °C, bevorzugt zwischen 150 °C und 420 °C und insbesondere zwischen 180 °C und 390 °C. Der Prozessdruck liegt zwischen 0,1 und 30 bar, insbesondere zwischen 1 und 10bar, wobei insbesondere ein metallhaltiger Katalysator eingesetzt werden kann, der insbesondere Platin und/oder Palladium enthält. Wesentlich ist, dass der Katalysator geeignet ist, Wasserstoff, der vom LOHC-Träger (T2) abgegeben wird, als Wasserstoffgas freizusetzen. Neben Platin und/oder Palladium sind dafür insbesondere Metalle, wie Chrom, Eisen, Kobalt, Nickel, Kupfer, Iridium oder Ruthenium, geeignet.

In einer bevorzugten Ausführungsform, welche Schritt c) beinhaltet, werden
i) Schritt a) und Schritt c) räumlich getrennt voneinander durchgeführt, vorzugsweise in einer Entfernung von mindestens 5km, insbesondere 50 bis 1000 km, und/oder
ii) Schritt a) und Schritt c) zeitlich getrennt voneinander durchgeführt werden, vorzugsweise wird Schritt c) mindestens einen Tag, besonders bevorzugt mindestens einen Monat, nach Schritt a) durchgeführt, und/oder
iii) Schritt c) in einer separaten Vorrichtung (V7) durchgeführt wird, die vorzugsweise ein chemischer Reaktor ist.

Weiterhin ist es bevorzugt, dass bei der Freisetzung von Wasserstoff gemäß Schritt c) zusätzlich der Träger (T1) wiedergewonnen wird.

Weiterhin ist es bevorzugt, dass bei der Freisetzung von Wasserstoff gemäß Schritt c) zusätzlich der Träger (T1) wiedergewonnen wird und der Träger (T1) erneut zur Durchführung von Schritt a) verwendet wird.

Figur 2 zeigt eine bevorzugte Ausführungsform des erfindungsgemäßen Verfahrens unter Berücksichtigung der Schritte a), b) und c). In Zusammenhang mit der Durchführung der beiden Schritte a) und b) in Figur 2 wird zunächst auf Figur 1 sowie die zugehörigen Ausführungen verwiesen, wo das erfindungsgemäße Verfahren in seiner breitesten verdeutlicht ist. Zusätzlich zu Figur 1 ist in der bevorzugten Ausführungsform gemäß Figur 2 mitberücksichtigt, dass das Wasser, bevor es in der Vorrichtung (V1) entsalzt wird, in einer Vorrichtung (V2) gelagert wird und/oder das Wasser mit einem Lastkraftwagen, einem Eisenbahnwagen, einem Schiff, einem Hochseeschiff und/oder mittels einer Rohrleitung just in time in die Vorrichtung (V1) angeliefert wird. Für alle Figuren, welche mit einem * gekennzeichnete Vorrichtungen enthalten, gilt, dass die mit * gekennzeichneten Komponenten für diese Ausführungsform optional sind.

Weiterhin ist in Figur 2 mitberücksichtigt, dass in Vorrichtung (V7) eine Freisetzung von Wasserstoff aus dem mit Wasserstoff beladenen Träger (T2) durchgeführt wird. Als Vorrichtung (V7) kommen prinzipiell alle dem Fachmann bekannten Vorrichtungen infrage, in denen Wasserstoff aus dem mit Wasserstoff beladenen Träger (T2) freigesetzt werden kann. Vorzugsweise handelt es sich bei (V7) um einen chemischen Reaktor.

In einer bevorzugten Ausführungsform der vorliegenden Erfindung wird im Anschluss an die Durchführung von Schritt a) sowie zeitlich unabhängig von der Durchführung des erfindungsgemäßen Schritt b) eine Lagerung des in Schritt a) erhaltenen, mit Wasserstoff beladenen Trägers (T2) durchgeführt. Die Lagerung des mit Wasserstoff beladenen Trägers (T2) kann dabei prinzipiell in der gleichen Vorrichtung durchgeführt werden, in der auch Schritt a) durchgeführt wird, beispielsweise in der Vorrichtung (V8). Im Rahmen der vorliegenden Erfindung ist es bevorzugt, dass die Durchführung des Schritts a) sowie die nachfolgende Lagerung des dabei erhaltenen, mit Wasserstoff beladenen Trägers (T2) in unterschiedlichen Vorrichtungen durchgeführt werden. Hierbei wird der in Schritt a) erhaltene mit Wasserstoff beladene Träger (T2) in einer Vorrichtung (V4) gelagert.

Die Lagerung des mit Wasserstoff beladenen Trägers (T2) kann prinzipiell für beliebige Zeiträume stattfinden. In der Regel erfolgt die Lagerung für mindestens mehrere Tage, sie kann aber auch mehrere Wochen, Monate oder gar Jahre betragen. Genauso ist es aber auch denkbar, dass die Lagerung nur für wenige Minuten oder Stunden oder für einen Tag durchgeführt wird. Vorzugsweise erfolgt die Lagerung für mindestens ein Tag und/oder maximal sechs Monate.

Ebenso ist es möglich, dass der mit Wasserstoff beladene Träger (T2) im Anschluss an seine Herstellung gemäß Schritt a) gar nicht in einer separaten Vorrichtung gelagert wird, sondern direkt weiterverarbeitet wird, indem er vorzugsweise zu einer geeigneten Vorrichtung zur Durchführung des nachfolgend definierten Schritts c) transportiert wird, wo der Wasserstoff aus dem Träger (T2) wieder freigesetzt wird. Vorzugsweise werden Schritt a) und Schritt c) in räumlicher Distanz zueinander durchgeführt, noch mehr bevorzugt zusätzlich mit einem zeitlichen Abstand, so dass vorzugsweise eine separate Lagerung des mit Wasserstoff beladenen Trägers im Anschluss an die Durchführung von Schritt a) erfolgt.

Eine mobile Vorrichtung (V3) zum Transport des mit Wasserstoff beladenen Trägers kann ein Lastkraftwagen, ein Eisenbahnwagen, ein Schiff, ein Hochseeschiff und/oder eine Rohrleitung sein.

Vorzugsweise wird diese Ausführungsform so durchgeführt, dass der in Schritt a) erhaltene, mit Wasserstoff beladene Träger (T2) in einer Vorrichtung (V4) gelagert wird, vorzugsweise ist die Vorrichtung (V4) ausgewählt aus einem Tank, einen Fermenter oder einem Behältnis, das durch Umrüsten einer Biogasanlage, insbesondere durch Umrüstung eines Fermenters, erhalten wurde oder das Bestandteil einer Biogasanlage ist.

In einer bevorzugten Ausführungsform
i) wird der in Schritt a) erhaltene, mit Wasserstoff beladene Träger (T2) in einer Vorrichtung (V4) gelagert, und/oder
ii) wird in Schritt a) Wasserstoff chemisch oder physisorptiv, vorzugsweise chemisch, an den Träger (T1) gebunden, und/oder
iii) ist der Träger (T1) eine ungesättigte Verbindung, bevorzugt eine Verbindung mit mindestens einer Kohlenstoff-Kohlenstoff-Doppelbindung, mehr bevorzugt eine aromatische oder hetero-aromatische Verbindung, noch mehr bevorzugt ein N-Alkylcarbazol, Toluol, Dibenzyltoluol, Benzyltoluol, Naphthalin oder ein Azaborin, besonders bevorzugt Dibenzyltoluol, und/oder
iv) wird in Schritt a) der mit Wasserstoff beladene Träger (T2) durch zumindest teilweise oder vollständige Hydrierung, vorzugsweise durch vollständige Hydrierung, mit Wasserstoff aus dem Träger (T1) erhalten.

Ebenfalls ist es möglich, dass Träger (T1) vor der Beladung mit Wasserstoff in Schritt a) zunächst in einer separaten Lagervorrichtung (V5) aufbewahrt wird und/oder in einer mobilen Vorrichtung (V3) transportiert wird. Denkbar ist auch eine Lagerung, gefolgt von einem Transport und einer erneuten Lagerung vor Beladung des Trägers (T1) mit Wasserstoff in Schritt a).

Erfindungsgemäß wird in einer bevorzugten Ausführungsform zwischen den Schritten a) und c) ein Schritt e) durchgeführt:
e) Transport des mit Wasserstoff beladenen Trägers (T2) in einer mobilen Vorrichtung (V3), wobei gegebenenfalls vor und/oder nach dem Transport in der mobilen Vorrichtung (V3) der mit Wasserstoff beladene Träger (T2) zusätzlich in jeweils einer Vorrichtung (V4) gelagert werden kann,
vorzugsweise ist die mobile Vorrichtung (V3) ausgewählt aus einem Lastkraftwagen, einem Eisenbahnwagen oder einem Schiff, mehr bevorzugt ist die mobile Vorrichtung (V3) ein Schiff, insbesondere ist die mobile Vorrichtung (V3) ein Hochseeschiff.

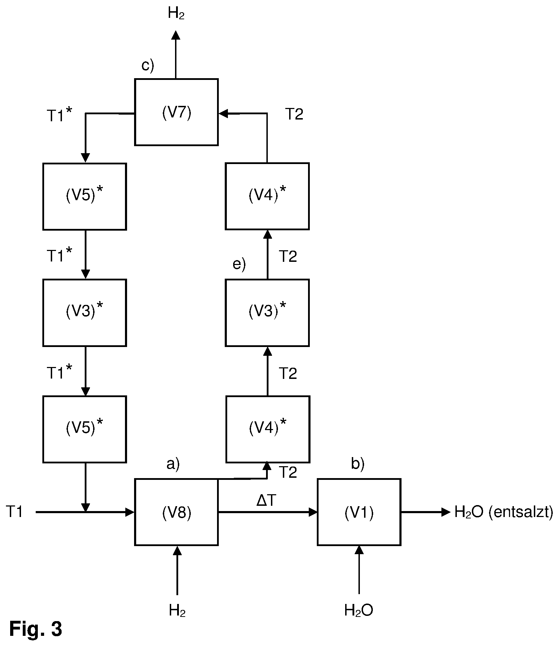

Figur 3 zeigt eine besonders bevorzugte Ausführungsform des erfindungsgemäßen Verfahrens unter Berücksichtigung der vorstehend beschriebenen Schritte a), b) und c). In Zusammenhang mit der Durchführung der Schritte a), b) und c) in Figur 3 wird zunächst auf die beiden Figuren 1 und 2 sowie die zugehörigen Ausführungen verwiesen. Zur Durchführung der zusätzlichen Schritte wird auf die vorstehende Beschreibung verwiesen. Lagerung und Transport des Trägers (T1) und des mit Wasserstoff beladenen Trägers (T2) können in dieser Ausführungsform gegebenenfalls auch weggelassen werden, vorzugsweise werden aber beide Schritte durchgeführt.

Zusätzlich zu Figur 2 ist in der besonders bevorzugten Ausführungsform gemäß Figur 3 mitberücksichtigt, dass der Träger (T1) vorzugsweise in einer separaten Vorrichtung (V5) beispielsweise in einem Zwischenlager in Form eines Tanks, aufbewahrt werden kann, nachdem Schritt c) beendigt ist und bevor Schritt a) durchgeführt wird. Der Einsatz einer solchen separaten Vorrichtung (V5) ist jedoch auch in dieser besonders bevorzugten Ausführungsform nicht zwingend, sondern optional. Der Einsatz einer solchen separaten Vorrichtung (V5) bietet sich insbesondere dann an, sofern ein längerer Zeitraum zwischen der Durchführung der beiden Verfahrensschritte c) und a) liegt und/oder eine sehr große Menge an Träger (T1) in Schritt a) mit Wasserstoff beladen werden soll. Sinngemäßes gilt für die Aufbewahrung des mit Wasserstoff beladenen Trägers (T2) in einer separaten Vorrichtung (V4). Zusätzlich zu den Lagervorrichtungen (V4) und (V5) ist die Nutzung einer mobilen Vorrichtung (V3) denkbar, um beispielsweise im Falle einer räumlichen Trennung von (V7) und (V8) den ent- und/oder beladenen Träger T1 und/oder T2 zwischen (V7) und (V8) zu transportieren. Die jeweiligen Lagerungen können zeitversetzt oder (zumindest teilweise) überschneidend durchgeführt werden, alternativ ist auch eine Lagerung der Träger (T1) und (T2) in einer einzigen Vorrichtung (V4) denkbar.

Gegebenenfalls kann auf die jeweiligen Lagerungen, insbesondere in den Vorrichtungen (V4) und/oder (V5), ganz oder zumindest teilweise auch verzichtet werden. Sofern eine räumliche Distanz zwischen den Vorrichtungen (V8) einerseits und (V7) andererseits vorhanden ist, muss die Zeit für den benötigten Transport beispielsweise des mit Wasserstoff beladenen Trägers (T2) mitberücksichtigt werden, so dass Schritt c) erst mit einer zeitlichen Verzögerung durchgeführt werden kann. Ebenso kann der Transport des mit Wasserstoff beladenen Trägers (T2) in einer geeigneten Transportvorrichtung, beispielsweise ein Lkw oder ein Eisenbahn-Tankwagen, mit einer Zwischenlagerung des mit Wasserstoff beladenen Trägers (T2) verknüpft werden, indem die entsprechende Transportvorrichtung, die mit dem Träger (T2) beladen ist, für einen bestimmten Zeitraum abgestellt wird. Sinngemäßes gilt selbstverständlich für die Rücküberführung des wiedergewonnenen Trägers (T1) aus Schritt a) nach Schritt c).

Im erfindungsgemäßen Verfahren wird vor Schritt a) ein Schritt d) durchgeführt. Gemäß des erfindungsgemäßen Schritts d) erfolgt die Erzeugung von Wasserstoff in einer Vorrichtung (V6), vorzugsweise in einem Elektrolyseur, unter Verwendung von Wasser und elektrischem Strom.

Die Durchführung des Verfahrensschritts d) als solchem ist dem Fachmann bekannt. Geeignete Elektrolyseure sind beispielsweise in DE-B 10 2013 223 589, DE-A 10 2012 005 023 oder EP-A 2780491 beschrieben. Hierbei kann es sich beispielsweise um einen sogenannten PEM-Elektrolyseur (Polymerelektrolytmembran) oder um einen SOEC-Elektrolyseur (solid oxide electolysis cell) sowie um einen Hochtemperatur-Elektrolyseur handeln. Letztendlich ist als Vorrichtung (V6) jede Art von Vorrichtung geeignet, in der die Zerlegung von Wasser in Wasserstoff oder Sauerstoff bei gleichzeitiger Einspeisung von elektrischem Strom durchgeführt werden kann. In der Vorrichtung (V6) sind in der Regel zwei Elektroden vorhanden. Bei dem eingesetzten Wasser handelt es sich normalerweise um VE-Wasser (vollentsalztes Wasser; siehe beispielsweise EP-A 2780491).

Der in Schritt d) verwendete elektrische Strom kann prinzipiell aus beliebigen Quellen stammen. So ist es denkbar, dass der elektrische Strom einem separaten Netz (Verbrauchernetz) entnommen wird. Vorzugsweise handelt es sich jedoch bei dem eingesetzten Strom gemäß Schritt d) um regenerativ hergestellten elektrischen Strom (Elektrizität). Dieser regenerativ hergestellte elektrische Strom wird vorzugsweise direkt oder in unmittelbarer Nähe der Durchführung des erfindungsgemäßen Verfahrens erzeugt. Der elektrische Strom kann beispielsweise aus Wasserkraft, Windenergie, solarer Strahlung (Sonnenenergie), Erdwärme (Geothermie), Biogas, Bioethanol, Holz oder durch die Gezeiten gewonnen werden. Die zur Gewinnung des elektrischen Stroms notwendigen Maschinen und Apparate sind ebenfalls bekannt. Es kann sich dabei um Wasserturbinen, Windanlagen, Fotovoltaik, Solarthermie, Verbrennungsmaschinen oder Turbinen, bei deren Brennstoff es sich um Biomasse handelt, stammen. Vorzugsweise wird der in Schritt d) des erfindungsgemäßen Verfahrens eingesetzte elektrische Strom durch Wasserkraft, Windenergie oder solare Strahlung erzeugt.

Vorzugsweise wird Schritt d) durchgeführt, indem
i) vorzugsweise der elektrische Strom aus erneuerbarer Energieerzeugung stammt, und/oder
ii) das bei der Elektrolyse verwendete entsalzte Wasser zumindest teilweise gemäß Schritt b) gewonnen wird, und/oder
iii) der Strom in einer Photovoltaik- oder Windkraftanlage erzeugt wird.

Im erfindungsgemäßen Verfahren werden die Schritte a), b) und d) in Kombination ausgeführt, das heißt, der aus der Elektrolyse in Schritt d) gewonnene Wasserstoff wird wiederum in Schritt a) verwendet, um einen Träger (T1) mit Wasserstoff zu beladen und die bei der Beladung freiwerdende Wärme wird in Schritt b) zur Wasserentsalzung eingesetzt.

Im erfindungsgemäßen Verfahren ist es weiterhin bevorzugt, dass nach Schritt c) ein Schritt f) durchgeführt wird.
f) Überführung des in Schritt c) erhaltenen Wasserstoffs in eine Vorrichtung (V9), wobei in der Vorrichtung (V9) Wasserstoff in elektrischen Strom umgewandelt und/oder Wasserstoff in Wärme für Wohnen oder Industrieprozesse umgewandelt wird und/oder Wasserstoff als chemischer Reaktionspartner eingesetzt wird.

Beispiele für mögliche Reaktionen, in denen Wasserstoff als Reaktionspartner eingesetzt werden kann, ohne sich jedoch auf diese Beispiele zu beschränken, sind die Fischer-Tropsch-Synthese, die Methanisierung und der Einsatz in Raffinerien.

In einer bevorzugten Ausführungsform wird in der Vorrichtung (V9) Wasserstoff in elektrischen Strom umgewandelt.

Wie vorstehend bereits erwähnt, wird in Schritt d) (in der Regel) neben Wasserstoff zusätzlich Sauerstoff erzeugt. Vorzugsweise wird in Schritt d) zusätzlich Sauerstoff erzeugt und dieser Sauerstoff wird in der (nachfolgend definierten) Vorrichtung (V9) gemäß Schritt f) gemeinsam mit Wasserstoff in elektrischen Strom und gegebenenfalls Wärme umgewandelt, wobei der Sauerstoff vor seiner Verwendung in Schritt f) gegebenenfalls zwischengespeichert wird. Vorrichtungen zum Zwischenspeichern von Sauerstoff sind dem Fachmann bekannt.

Die Vorrichtung (V9) als solche ist dem Fachmann bekannt. Vorzugsweise ist die Vorrichtung (V9) Bestandteil eines Blockheizkraftwerkes, ein Gasmotor, eine Brennstoffzelle, ein Verbrennungsmotor, ein Verbrennungsmotor mit angeschlossenem Generator, eine Turbine oder eine Wasserstoffturbine mit angeschlossenem Generator, vorzugsweise ein Gasmotor.

Weiterhin ist es bevorzugt, dass die gegebenenfalls in Schritt f) erzeugte Wärme nach Schritt c) zurückgeleitet wird.

In einer bevorzugten Ausführungsform wird
i) bei der Freisetzung von Wasserstoff gemäß Schritt c) zusätzlich der Träger (T1) wiedergewonnen, und/oder
ii) bei der Freisetzung von Wasserstoff gemäß Schritt c) zusätzlich der Träger (T1) wiedergewonnen und der Träger (T1) erneut zur Durchführung von Schritt a) verwendet, und/oder
iii) bei der Freisetzung von Wasserstoff gemäß Schritt c) zusätzlich der Träger (T1) wiedergewonnen und der Träger (T1) in einer mobilen Vorrichtung (V3) transportiert, um den Träger (T1) erneut zur Durchführung von Schritt a) zu verwenden, vorzugsweise ist die mobile Vorrichtung (V3) ausgewählt aus einem Lastkraftwagen, einem Eisenbahnwagen oder einem Schiff, mehr bevorzugt ist die mobile Vorrichtung (V3) ein Schiff, insbesondere ist die mobile Vorrichtung (V3) ein Hochseeschiff, und/oder
iv) bei der Freisetzung von Wasserstoff gemäß Schritt c) zusätzlich der Träger (T1) wiedergewonnen und anschließend der Träger (T1) in einer separaten Vorrichtung (V5) oder in der Vorrichtung (V4) gelagert.

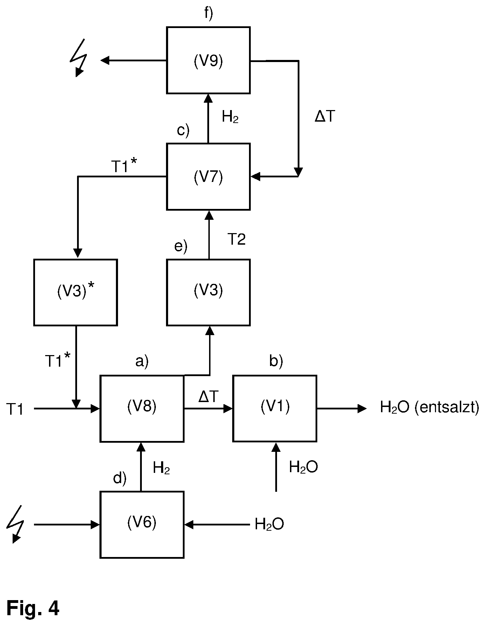

Figur 4 zeigt eine besonders bevorzugte Ausführungsform des erfindungsgemäßen Verfahrens unter Berücksichtigung der vorstehend beschriebenen Schritte a), b), c), d), e) und f). In Zusammenhang mit der Durchführung der Schritte a), b), c) und e) in Figur 4 wird zunächst auf die Figuren 1, 2 und 3 sowie die zugehörigen Ausführungen verwiesen. Zur Durchführung der jeweiligen Schritte d) und f) wird auf die vorstehende Beschreibung verwiesen. Die Schritte d) und/oder f) können in dieser Ausführungsform gegebenenfalls auch weggelassen werden, vorzugsweise werden aber beide Schritte d) und f) durchgeführt.

Zusätzlich zu Figur 3 ist in der besonders bevorzugten Ausführungsform gemäß Figur 4 mitberücksichtigt, dass das in Schritt b) entsalzte Wasser einer Elektrolyse in der Vorrichtung (V6) zugeführt wird.

Das Freisetzen des Wasserstoffs gemäß Verfahrensschritt c) erfolgt vorzugsweise in einem druckstabilen chemischen Reaktor bei einer Prozesstemperatur zwischen 100 °C und 450 °C, bevorzugt zwischen 150 °C und 420 °C und insbesondere zwischen 180 °C und 390 °C. Der Prozessdruck liegt zwischen 0,1 und 30 bar, insbesondere zwischen 1 und 10 bar, wobei insbesondere ein metallhaltiger Katalysator eingesetzt werden kann, der insbesondere Platin und/oder Palladium enthält. Wesentlich ist, dass der Katalysator geeignet ist, Wasserstoff, der vom LOHC-Träger (T2) abgegeben wird, als Wasserstoffgas freizusetzen. Neben Platin und/oder Palladium sind dafür insbesondere Metalle, wie Chrom, Eisen, Kobalt, Nickel, Kupfer, Iridium oder Ruthenium, geeignet.

Im Rahmen der vorliegenden Erfindung ist es weiterhin bevorzugt, dass
i) sich die Vorrichtungen (V7) und (V4) und/oder (V5) in räumlicher Nähe zueinander befinden, vorzugsweise auf demselben Betriebsgelände, und/oder
ii) die Vorrichtung (V4) zwei räumlich getrennte Bereiche aufweist, wobei ein erster Bereich zur Lagerung des mit Wasserstoff beladenen Trägers (T2) verwendet wird und ein zweiter Bereich zur Lagerung des Trägers (T1) verwendet wird, und/oder
iii) die Vorrichtung (V4) in ihrem Inneren mit einer Schutzauskleidung versehen wird, bevor die Lagerung des Trägers (T2) und gegebenenfalls des Trägers (T1) durchgeführt wird, und/oder
iv) in die Vorrichtung (V4) eine schwimmende Trennwand eingebaut ist und der mit Wasserstoff beladene Träger (T2) unterhalb der schwimmenden Trennwand gelagert wird, und/oder
v) die Vorrichtung (V4) Bestandteil einer Biogasanlage war und von allen Substanzen gereinigt war, die sich infolge der Erzeugung von Biogas in ihrem Inneren oder gegebenenfalls in ihren Zuleitungen befunden haben, bevor die Lagerung des Trägers (T2) und gegebenenfalls des Trägers (T1) durchgeführt wird.

Erfindungsgemäß wird weiterhin bevorzugt, dass das Verfahren zur Speicherung von Wasserstoff und der Freisetzung von Wärme in einer Anlage durchgeführt wird, die weiterhin zur Erzeugung von Biogas eingesetzt werden kann.

Im Rahmen der vorliegenden Erfindung ist es weiterhin bevorzugt, dass
i) die Erzeugung von Biogas einerseits und das Speichern und Lagern von Wasserstoff oder die Erzeugung von elektrischem Strom sowie gegebenenfalls von Wärme andererseits parallel auf derselben Anlage durchgeführt werden, und/oder
ii) die Erzeugung von Biogas in einem separaten Fermenter durchgeführt wird, der nicht Bestandteil der Vorrichtung (V4) zur Lagerung des mit Wasserstoff beladenen Trägers (T2) ist.

Die in den vorgenannten Optionen erwähnten Zeitspannen sind prinzipiell beliebig. Es kann sich dabei um eine oder mehrere Stunden, einen oder mehrere Tage oder sogar um noch längere Zeiträume, wie Wochen und Monate, handeln. Dies hängt ganz vom jeweiligen Bedarf der Erzeugung von entsalztem Wasser, der Speicherung von Wasserstoff und/oder der Erzeugung von elektrischem Strom ab.

## Patentansprüche

1. Verfahren zur Entsalzung von Wasser umfassend die nachfolgenden Schritte a) und b):
a) Inkontaktbringen eines Trägers (T1) mit Wasserstoff zur Speicherung des Wasserstoffs unter Erhalt eines mit Wasserstoff beladenen Trägers (T2) sowie Freisetzung von Wärme,
b) Einspeisung der in Schritt a) freigesetzten Wärme in eine Vorrichtung (V1), um in der Vorrichtung (V1) Wasser zu entsalzen,
wobei in der Vorrichtung (V1) Meerwasser entsalzt wird und in der Vorrichtung (V1) entsalztes Wasser mit einem maximalen Salzgehalt von höchstens 1,5 mmol/kg erhalten wird,
und wobei der Träger (T1) eine ungesättigte Verbindung ist,
und wobei vor Schritt a) ein Schritt d) durchgeführt wird:
d) Erzeugung von Wasserstoff in einem Elektrolyseur unter Verwendung von Wasser und elektrischem Strom,
wobei das bei der Elektrolyse verwendete entsalzte Wasser zumindest teilweise gemäß Schritt b) gewonnen wird.

2. Verfahren gemäß Anspruch 1, **dadurch gekennzeichnet, dass** in Schritt b)
i) die Vorrichtung (V1) eine Meerwasserentsalzungsanlage umfasst,
vorzugsweise umfasst die Meerwasserentsalzungsanlage mindestens eine Pumpe, mindestens einen Bereich zum Erwärmen von Wasser, mindestens ein Vorratsgefäß, mindestens eine Zuleitung und/oder mindestens einen Auslass, und/oder
ii) die in Schritt a) freigesetzte Wärme über eine Rohrleitung oder ein Rohrleitungssystem in die Vorrichtung (V1) geleitet wird, und/oder
iii) die in Schritt a) freigesetzte Wärme durch einen Wärmetauscher geleitet wird, um das in der Vorrichtung (V1) enthaltene Wasser, insbesondere Meerwasser, aufzuheizen, vorzugsweise wird mindestens einen Wärmetauscher eingesetzt, um das sich auf dem höchsten Temperaturniveau in der Vorrichtung (V1) befindliche Wasser weiter zu erwärmen, und/oder
iv) die Vorrichtung (V1) mindestens zwei Bereiche mit unterschiedlichen Temperaturzonen aufweist.

3. Verfahren gemäß Anspruch 1 oder 2, **dadurch gekennzeichnet, dass**
i) Schritt a) und Schritt b) in räumlicher Nähe durchgeführt werden, vorzugsweise befinden sich die jeweiligen Vorrichtungen zur Durchführung der beiden Schritte a) und b) auf demselben Betriebsgelände, und/oder
ii) Schritt a) in einer separaten Vorrichtung (V8) durchgeführt wird, die vorzugsweise ein chemischer Reaktor ist.

4. Verfahren gemäß einem der Ansprüche 1 bis 3, **dadurch gekennzeichnet, dass**
i) in der Vorrichtung (V1) Trinkwasser erhalten wird, und/oder
ii) das Wasser, bevor es in der Vorrichtung (V1) entsalzt wird, in einer Vorrichtung (V2) gelagert wird und/oder das Wasser mit einem Lastkraftwagen, einem Eisenbahnwagen, einem Schiff, einem Hochseeschiff, mittels einer Rohrleitung, oder mittels einer Pipeline in die Vorrichtung (V1) angeliefert wird.

5. Verfahren gemäß einem der Ansprüche 1 bis 4, **dadurch gekennzeichnet, dass** nach Schritt a) ein Schritt c) durchgeführt wird:
c) Freisetzung von Wasserstoff aus dem mit Wasserstoff beladenen Träger (T2).

6. Verfahren gemäß Anspruch 5, **dadurch gekennzeichnet, dass**
i) Schritt a) und Schritt c) räumlich getrennt voneinander durchgeführt werden, vorzugsweise in einer Entfernung von mindestens 5 km, insbesondere 50 bis 1000 km, und/oder
ii) Schritt a) und Schritt c) zeitlich getrennt voneinander durchgeführt werden, vorzugsweise wird Schritt c) mindestens einen Tag, besonders bevorzugt mindestens einen Monat, nach Schritt a) durchgeführt, und/oder
iii) Schritt c) in einer separaten Vorrichtung (V7) durchgeführt wird, die vorzugsweise ein chemischer Reaktor ist.

7. Verfahren gemäß einem der Ansprüche 1 bis 6, **dadurch gekennzeichnet, dass**
i) der in Schritt a) erhaltene, mit Wasserstoff beladene Träger (T2) in einer Vorrichtung (V4) gelagert wird, und/oder
ii) in Schritt a) Wasserstoff chemisch oder physisorptiv, vorzugsweise chemisch, an den Träger (T1) gebunden wird, und/oder
iii) der Träger (T1) eine Verbindung mit mindestens einer Kohlenstoff-Kohlenstoff-Doppelbindung, mehr bevorzugt eine aromatische oder hetero-aromatische Verbindung, noch mehr bevorzugt ein N-Alkylcarbazol, Toluol, Dibenzyltoluol, Benzyltoluol, Naphthalin oder ein Azaborin, besonders bevorzugt Dibenzyltoluol, ist, und/oder
iv) in Schritt a) der mit Wasserstoff beladene Träger (T2) durch zumindest teilweise oder vollständige Hydrierung, vorzugsweise durch vollständige Hydrierung, mit Wasserstoff aus dem Träger (T1) erhalten wird.

8. Verfahren gemäß einem der Ansprüche 1 bis 7, **dadurch gekennzeichnet, dass**
der elektrische Strom aus erneuerbarer Energieerzeugung stammt, besonders bevorzugt wird der Strom in einer Photovoltaik- oder Windkraftanlage erzeugt

9. Verfahren gemäß einem der Ansprüche 5 oder 6, **dadurch gekennzeichnet, dass** zwischen Schritt a) und Schritt c) ein Schritt e) durchgeführt wird:
e) Transport des mit Wasserstoff beladenen Trägers (T2) in einer mobilen Vorrichtung (V3), wobei gegebenenfalls vor und/oder nach dem Transport in der mobilen Vorrichtung (V3) der mit Wasserstoff beladene Träger (T2) zusätzlich in jeweils einer Vorrichtung (V4) gelagert werden kann,
vorzugsweise ist die mobile Vorrichtung (V3) ausgewählt aus einem Lastkraftwagen, einem Eisenbahnwagen oder einem Schiff, mehr bevorzugt ist die mobile Vorrichtung (V3) ein Schiff, insbesondere ist die mobile Vorrichtung (V3) ein Hochseeschiff.

10. Verfahren gemäß einem der Ansprüche 5, 6 oder 9, **dadurch gekennzeichnet, dass** nach Schritt c) ein Schritt f) durchgeführt wird:
f) Überführung des in Schritt c) erhaltenen Wasserstoffs in eine Vorrichtung (V9), wobei in der Vorrichtung (V9) Wasserstoff in elektrischen Strom umgewandelt wird und/oder Wasserstoff in Wärme für Wohnen oder Industrieprozesse umgewandelt wird und/oder Wasserstoff als chemischer Reaktionspartner eingesetzt wird.

11. Verfahren gemäß Anspruch 10, **dadurch gekennzeichnet, dass**
i) die Vorrichtung (V9) Bestandteil eines Blockheizkraftwerkes, ein Gasmotor, eine Brennstoffzelle, ein Verbrennungsmotor, ein Verbrennungsmotor mit angeschlossenem Generator, eine Turbine oder eine Wasserstoffturbine mit angeschlossenem Generator, vorzugsweise ein Gasmotor, ist, und/oder
ii) die gegebenenfalls in Schritt f) erzeugte Wärme nach Schritt c) zurückgeleitet wird.

12. Verfahren gemäß einem der Ansprüche 5, 6, 10 oder 11, **dadurch gekennzeichnet, dass**
i) bei der Freisetzung von Wasserstoff gemäß Schritt c) zusätzlich der Träger (T1) wiedergewonnen wird, und/oder
ii) bei der Freisetzung von Wasserstoff gemäß Schritt c) zusätzlich der Träger (T1) wiedergewonnen wird und der Träger (T1) erneut zur Durchführung von Schritt a) verwendet wird, und/oder
iii) bei der Freisetzung von Wasserstoff gemäß Schritt c) zusätzlich der Träger (T1) wiedergewonnen wird und der Träger (T1) in einer mobilen Vorrichtung (V3) transportiert wird, um den Träger (T1) erneut zur Durchführung von Schritt a) zu verwenden, vorzugsweise ist die mobile Vorrichtung (V3) ausgewählt aus einem Lastkraftwagen, einem Eisenbahnwagen oder einem Schiff, mehr bevorzugt ist die mobile Vorrichtung (V3) ein Schiff, insbesondere ist die mobile Vorrichtung (V3) ein Hochseeschiff, und/oder
iv) bei der Freisetzung von Wasserstoff gemäß Schritt c) zusätzlich der Träger (T1) wiedergewonnen wird und anschließend der Träger (T1) in einer separaten Vorrichtung (V5) oder in der Vorrichtung (V4) gelagert wird,

13. Verfahren gemäß einem der Ansprüche 1 bis 12, **dadurch gekennzeichnet, dass**
i) die Vorrichtungen (V7) und (V4) und/oder (V5) sich in räumlicher Nähe zueinander befinden, vorzugsweise auf demselben Betriebsgelände, und/oder
ii) die Vorrichtung (V4) zwei räumlich getrennte Bereiche aufweist, wobei ein erster Bereich zur Lagerung des mit Wasserstoff beladenen Trägers (T2) verwendet wird und ein zweiter Bereich zur Lagerung des Trägers (T1) verwendet wird, und/oder
iii) die Vorrichtung (V4) in ihrem Inneren mit einer Schutzauskleidung versehen wird, bevor die Lagerung des Trägers (T2) und gegebenenfalls des Trägers (T1) durchgeführt wird, und/oder
iv) in die Vorrichtung (V4) eine schwimmende Trennwand eingebaut ist und der mit Wasserstoff beladene Träger (T2) unterhalb der schwimmenden Trennwand gelagert wird, und/oder
v) die Vorrichtung (V4) Bestandteil einer Biogasanlage war und von allen Substanzen gereinigt war, die sich infolge der Erzeugung von Biogas in ihrem Inneren oder gegebenenfalls in ihren Zuleitungen befunden haben, bevor die Lagerung des Trägers (T2) und gegebenenfalls des Trägers (T1) durchgeführt wird.

14. Verfahren gemäß einem der Ansprüche 1 bis 13, **dadurch gekennzeichnet, dass** das Verfahren in einer Anlage durchgeführt wird, die weiterhin zur Erzeugung von Biogas eingesetzt werden kann.

15. Verfahren gemäß Anspruch 14, **dadurch gekennzeichnet, dass**
i) die Erzeugung von Biogas einerseits und das Speichern und Lagern von Wasserstoff oder die Erzeugung von elektrischem Strom sowie gegebenenfalls von Wärme andererseits parallel auf derselben Anlage durchgeführt werden, und/oder
ii) die Erzeugung von Biogas in einem separaten Fermenter durchgeführt wird, der nicht Bestandteil der Vorrichtung (V4) zur Lagerung des mit Wasserstoff beladenen Trägers (T2) ist.

## Claims

1. Method for desalinating water comprising the following steps a) and b):
a) Bringing a carrier (T1) into contact with hydrogen to store the hydrogen, thereby obtaining a hydrogen-loaded carrier (T2) and releasing heat,
b) feeding the heat released in step a) into a device (V1) in order to desalinate water in the device (V1),
wherein seawater is desalinated in the device (V1) and water with a maximum salt content of no more than 1.5 mmol/kg is obtained in the device (V1),
and wherein the carrier (T1) is an unsaturated compound,
and wherein a step d) is carried out prior to step a):
d) Generation of hydrogen in an electrolyzer using water and electric current,
wherein the desalinated water used in the electrolysis is obtained at least in part according to step b).

2. Method according to claim 1, **characterized in that** in step b)
i) the device (V1) comprises a seawater desalination plant,
preferably the seawater desalination plant comprises at least one pump, at least one area for heating water, at least one storage vessel, at least one supply line and/or at least one outlet, and/or
ii) the heat released in step a) is conducted into the device (V1) via a pipe or a pipe system, and/or
iii) the heat released in step a) is conducted through a heat exchanger in order to heat the water contained in the device (V1), in particular seawater, preferably at least one heat exchanger is used to further heat the water at the highest temperature level in the device (V1), and/or
iv) the device (V1) has at least two areas with different temperature zones.

3. Method according to claim 1 or 2, **characterized in that**
i) step a) and step b) are carried out in close proximity to each other, preferably the respective devices for carrying out the two steps a) and b) are located on the same premises, and/or
ii) step a) is carried out in a separate device (V8), which is preferably a chemical reactor.

4. Method according to any of claims 1 to 3, **characterized in that**
i) drinking water is obtained in the device (V1), and/or
ii) the water is stored in a device (V2) before being desalinated in the device (V1) and/or the water is delivered to the device (V1) by truck, rail car, ship, ocean-going vessel, or by means of piping or a pipeline.

5. Method according to any of claims 1 to 4, **characterized in that** after step a) a step c) is carried out:
c) Release of hydrogen from the hydrogen-loaded carrier (T2).

6. Method according to claim 5, **characterized in that**
i) step a) and step c) are carried out spatially separated from each other, preferably at a distance of at least 5 km, in particular 50 to 1000 km, and/or
ii) step a) and step c) are carried out at different times, preferably step c) is carried out at least one day, particularly preferably at least one month, after step a), and/or
iii) step c) is carried out in a separate device (V7), which is preferably a chemical reactor.

7. Method according to any of claims 1 to 6, **characterized in that**
i) the hydrogen-loaded carrier (T2) obtained in step a) is stored in a device (V4), and/or
ii) in step a), hydrogen is chemically or physisorptively, preferably chemically, bound to the carrier (T1), and/or
iii) the carrier (T1) is a compound with at least one carbon-carbon double bond, more preferably an aromatic or heteroaromatic compound, even more preferably an N-alkylcarbazole, toluene, dibenzyltoluene, benzyltoluene, naphthalene or an azaborine, particularly preferably dibenzyltoluene, and/or
iv) in step a), the hydrogen-loaded carrier (T2) is obtained from the carrier (T1) by at least partial or complete hydrogenation, preferably by complete hydrogenation.

8. Method according to any of claims 1 to 7, **characterized in that**
the electrical current comes from renewable energy generation, with particular preference for current generated in a photovoltaic or wind power plant.

9. Method according to one of claims 5 or 6, **characterized in that** a step e) is carried out between step a) and step c):
e) transporting the hydrogen-loaded carrier (T2) in a mobile device (V3), wherein, if necessary, before and/or after transport in the mobile device (V3), the hydrogen-loaded carrier (T2) can additionally be stored in a respective device (V4),
preferably, the mobile device (V3) is selected from a truck, a railway wagon, or a ship, more preferably, the mobile device (V3) is a ship, in particular, the mobile device (V3) is an ocean-going vessel.

10. Method according to any of claims 5, 6, or 9, **characterized in that** after step c), a step f) is carried out:
f) transferring the hydrogen obtained in step c) into a device (V9), wherein in the device (V9) hydrogen is converted into electrical current and/or hydrogen is converted into heat for residential or industrial processes and/or hydrogen is used as a chemical reaction partner.

11. Method according to claim 10, **characterized in that**
i) the device (V9) is part of a block heat and power plant, a gas engine, a fuel cell, an internal combustion engine, an internal combustion engine with a connected generator, a turbine, or a hydrogen turbine with a connected generator, preferably a gas engine, and/or
ii) the heat generated in step f), if applicable, is returned into step c).

12. Method according to any of claims 5, 6, 10, or 11, **characterized in that**
i) during the release of hydrogen according to step c), the carrier (T1) is additionally recovered, and/or
ii) during the release of hydrogen according to step c), the carrier (T1) is additionally recovered and the carrier (T1) is reused to perform step a), and/or
iii) during the release of hydrogen according to step c), the carrier (T1) is additionally recovered and the carrier (T1) is transported in a mobile device (V3) in order to reuse the carrier (T1) for carrying out step a), preferably the mobile device (V3) is selected from a truck, a railway wagon or a ship, more preferably, the mobile device (V3) is a ship, in particular, the mobile device (V3) is an ocean-going vessel, and/or
iv) during the release of hydrogen according to step c), the carrier (T1) is additionally recovered and subsequently the carrier (T1) is stored in a separate device (V5) or in the device (V4).

13. Method according to any of claims 1 to 12, **characterized in that**
i) the devices (V7) and (V4) and/or (V5) are located in close proximity to each other, preferably on the same premises, and/or
ii) the device (V4) has two spatially separated areas, wherein a first area is used for storing the carrier (T2) loaded with hydrogen and a second area is used for storing the carrier (T1), and/or
iii) the device (V4) is provided with a protective lining inside before the carrier (T2) and, if applicable, the carrier (T1) are stored, and/or
iv) a floating partition is installed in the device (V4) and the hydrogen-loaded carrier (T2) is stored below the floating partition, and/or
v) the device (V4) was part of a biogas plant and was cleaned of all substances that were as a result of biogas production inside it or, if applicable, in its supply lines, before the carrier (T2) and, if applicable, the carrier (T1) are stored.

14. Method according to any of claims 1 to 13, **characterized in that** the method is carried out in a plant that can also be used to produce biogas.

15. Method according to claim 14, **characterized in that**
i) the production of biogas on the one hand and the storage and warehousing of hydrogen or the generation of electrical power and, if applicable, heat on the other hand are carried out in parallel on the same plant, and/or
ii) the production of biogas is carried out in a separate fermenter which is not part of the device (V4) for storing the hydrogen-loaded carrier (T2).

## Revendications

1. Procédé de dessalement de l'eau comprenant les étapes suivantes a) et b) :
a) mise en contact d'un support (T1) avec de l'hydrogène pour stocker l'hydrogène en obtenant un support (T2) chargé en hydrogène et libérer de la chaleur,
b) alimentation d'un dispositif (V1) avec la chaleur libérée à l'étape a) afin de dessaler de l'eau dans le dispositif (V1),
l'eau de mer étant dessalée dans le dispositif (V1) et l'eau dessalée obtenue dans le dispositif (V1) ayant une teneur maximale en sel d'au plus 1,5 mmol/kg,
et dans lequel le support (T1) est un composé insaturé,
et dans lequel une étape d) est effectuée avant l'étape a) :
d) production d'hydrogène dans un électrolyseur à l'aide d'eau et de courant électrique,
l'eau dessalée utilisée dans l'électrolyse étant obtenue au moins en partie conformément à l'étape b).

2. Procédé selon la revendication 1, **caractérisé en ce que**, à l'étape b)
i) le dispositif (V1) comprend une installation de dessalement d'eau de mer,
de préférence l'installation de dessalement d'eau de mer comprend au moins une pompe, au moins une zone pour chauffer l'eau, au moins un réservoir de stockage, au moins une conduite d'alimentation et/ou au moins une sortie, et/ou
ii) la chaleur libérée à l'étape a) est acheminée vers le dispositif (V1) via une conduite ou un système de conduites, et/ou
iii) la chaleur libérée à l'étape a) est acheminée par un échangeur de chaleur afin de chauffer l'eau contenue dans le dispositif (V1), en particulier l'eau de mer, de préférence, au moins un échangeur de chaleur est utilisé afin de chauffer davantage l'eau se trouvant au niveau de température le plus élevé dans le dispositif (V1), et/ou
iv) le dispositif (V1) comporte au moins deux zones avec des températures différentes.

3. Procédé selon la revendication 1 ou 2, **caractérisé en ce que**
i) les étapes a) et b) sont réalisées à proximité l'une de l'autre, de préférence les dispositifs respectifs pour la réalisation des deux étapes a) et b) se trouvent sur le même site d'exploitation, et/ou
ii) l'étape a) est réalisée dans un dispositif séparé (V8) qui est de préférence un réacteur chimique.

4. Procédé selon l'une des revendications 1 à 3, **caractérisé en ce que**
i) de l'eau potable est obtenue dans le dispositif (V1), et/ou
ii) l'eau est stockée dans un dispositif (V2) avant d'être dessalée dans le dispositif (V1) et/ou l'eau est acheminée vers le dispositif (V1)par camion, wagon, navire, navire de haute mer, ou au moyen d'une canalisation ou d'un pipeline.

5. Procédé selon l'une des revendications 1 à 4, **caractérisé en ce qu'**après l'étape a), une étape c) est effectuée :
c) libération d'hydrogène à partir du support chargé en hydrogène (T2).

6. Procédé selon la revendication 5, **caractérisé en ce que**
i) l'étape a) et l'étape c) sont réalisées séparément l'une de l'autre, de préférence à une distance d'au moins 5 km, en particulier de 50 à 1000 km, et/ou
ii) l'étape a) et l'étape c) sont réalisées séparément dans le temps, de préférence l'étape c) est réalisée au moins un jour, de préférence au moins un mois, après l'étape a), et/ou
iii) l'étape c) est réalisée dans un dispositif séparé (V7), qui est de préférence un réacteur chimique.

7. Procédé selon l'une des revendications 1 à 6, **caractérisé en ce que**
i) le support (T2) chargé en hydrogène obtenu à l'étape a) est stocké dans un dispositif (V4), et/ou
ii) à l'étape a), l'hydrogène est lié chimiquement ou par physiosorption, de préférence chimiquement, au support (T1), et/ou
iii) le support (T1) est un composé comportant au moins une double liaison carbone-carbone, de préférence un composé aromatique ou hétéroaromatique, de préférence encore un N-alkylcarbazole, un toluène, un dibenzyltoluène, un benzyltoluène, un naphtalène ou un azaborine, de préférence encore un dibenzyltoluène, et/ou
iv) à l'étape a), le support (T2) chargé en hydrogène est obtenu à partir du support (T1) par hydrogénation au moins partielle ou totale, de préférence par hydrogénation totale.

8. Procédé selon l'une des revendications 1 à 7, **caractérisé en ce que**
le courant électrique provient d'une production d'énergie renouvelable, l'électricité étant de préférence produite dans une installation photovoltaïque ou éolienne.

9. Procédé selon l'une des revendications 5 ou 6, **caractérisé en ce qu'**une étape e) est effectuée entre l'étape a) et l'étape c) :
e) transport du support chargé d'hydrogène (T2) dans un dispositif mobile (V3), le support chargé d'hydrogène (T2) pouvant éventuellement être stocké avant et/ou après le transport dans le dispositif mobile (V3) dans un dispositif (V4) supplémentaire,
de préférence, le dispositif mobile (V3) est choisi parmi un camion, un wagon de chemin de fer ou un navire, de préférence, le dispositif mobile (V3) est un navire, en particulier, le dispositif mobile (V3) est un navire de haute mer.

10. Procédé selon l'une des revendications 5, 6 ou 9, **caractérisé en ce qu'**après l'étape c), une étape f) est effectuée :
f) transfert de l'hydrogène obtenu à l'étape c) dans un dispositif (V9), dans lequel l'hydrogène est converti en courant électrique et/ou l'hydrogène est converti en chaleur pour l'habitat ou des processus industriels et/ou l'hydrogène est utilisé comme partenaire de réaction chimique.

11. Procédé selon la revendication 10, **caractérisé en ce que**
i) le dispositif (V9) fait partie intégrante d'une centrale de cogénération, d'un moteur à gaz, d'une pile à combustible, d'un moteur à combustion interne, d'un moteur à combustion interne avec générateur raccordé, d'une turbine ou d'une turbine à hydrogène avec générateur raccordé, de préférence d'un moteur à gaz, et/ou
ii) la chaleur éventuellement produite à l'étape f) est renvoyée à l'étape c).

12. Procédé selon l'une des revendications 5, 6, 10 ou 11, **caractérisé en ce que**
i) lors de la libération d'hydrogène selon l'étape c), le support (T1) est en outre récupéré, et/ou
ii) lors de la libération d'hydrogène selon l'étape c), le support (T1) est en outre récupéré et le support (T1) est réutilisé pour la mise en œuvre de l'étape a), et/ou
iii) lors de la libération d'hydrogène selon l'étape c), le support (T1) est en outre récupéré et le support (T1) est transporté dans un dispositif mobile (V3) afin de réutiliser le support (T1) pour la mise en œuvre de l'étape a), de préférence, le dispositif mobile (V3) est choisi parmi un camion, un wagon de chemin de fer ou un navire, de préférence, le dispositif mobile (V3) est un navire, en particulier, le dispositif mobile (V3) est un navire de haute mer, et/ou
iv) lors de la libération d'hydrogène selon l'étape c), le support (T1) est en outre récupéré, puis le support (T1) est stocké dans un dispositif séparé (V5) ou dans le dispositif (V4).

13. Procédé selon l'une des revendications 1 à 12, **caractérisé en ce que**
i) les dispositifs (V7) et (V4) et/ou (V5) se trouvent à proximité les uns des autres, de préférence sur le même site d'exploitation, et/ou
ii) le dispositif (V4) comporte deux zones spatialement séparées, une première zone étant utilisée pour le stockage du support (T2) chargé en hydrogène et une deuxième zone étant utilisée pour le stockage du support (T1), et/ou
iii) le dispositif (V4) est muni à l'intérieur d'un garnissement de protection avant que le stockage du support (T2) et, le cas échéant, du support (T1) ne soit effectué, et/ou
iv) une cloison flottante est installée dans le dispositif (V4) et le support chargé en hydrogène (T2) est stocké sous la cloison flottante, et/ou
v) le dispositif (V4) faisait partie d'une installation de biogaz et a été nettoyé de toutes les substances qui se trouvaient à cause de la production de biogaz à l'intérieur ou, le cas échéant, dans ses conduites d'alimentation avant que le stockage du support (T2) et, le cas échéant, du support (T1) ne soit effectué.14. Procédé selon l'une des revendications 1 à 13, **caractérisé en ce que** le procédé est mis en œuvre dans une installation qui peut en outre être utilisée pour produire du biogaz.

14. Procédé selon l'une des revendications 1 à 13, **caractérisé en ce que** le procédé est mis en œuvre dans une installation qui peut en outre être utilisée pour produire du biogaz.

15. Procédé selon la revendication 14, **caractérisé en ce que**
i) la production de biogaz d'une part et le stockage et l'entreposage d'hydrogène ou la production d'électricité et, le cas échéant, de chaleur d'autre part sont effectués en parallèle dans la même installation, et/ou
ii) la production de biogaz est effectuée dans un fermenteur séparé qui ne fait pas partie du dispositif (V4) destiné à stocker le support (T2) chargé d'hydrogène.
